# EUROPEAN PATENT SPECIFICATION

(11) **EP 3 264 284 B1**
(45) Date of publication and mention of the grant of the patent: **15.09.2021**
(21) Application number: 15886803.4
(22) Date of filing: 27.03.2015
(51) Int. Cl.: G06F 16/00, H04N 19/124, H04N 19/137, H04N 19/154, G06F 3/14

(54) **DATA PROCESSING METHOD AND DEVICE**
DATENVERARBEITUNGSVERFAHREN UND -VORRICHTUNG
PROCÉDÉ ET DISPOSITIF DE TRAITEMENT DE DONNÉES

(43) Date of publication of application: 03.01.2018
(73) Proprietor: Huawei Technologies Co., Ltd., Shenzhen, Guangdong 518129 (CN)
(72) Inventor: SUN, Zengcai, Shenzhen Guangdong 518129 (CN)
(74) Representative: Maiwald Patent- und Rechtsanwaltsgesellschaft mbH
(86) International application number: PCT/CN2015/075290
(87) International publication number: WO 2016/154816

(56) References cited:
- EP-A1- 2 785 070
- CN-A- 101 855 911
- CN-A- 102 546 917
- US-A1- 2007 064 808
- US-A1- 2009 327 917
- US-A1- 2010 104 021
- US-A1- 2011 103 465
- US-A1- 2013 050 254
- US-A1- 2013 128 948

## Description

### TECHNICAL FIELD

The present invention relates to the field of data processing, and in particular, to a data processing method and apparatus.

### BACKGROUND

Multi-screen displaying by means of sharing refers to a technology for simultaneously displaying an image frame in a display buffer of a first device on a second device. Before the first device shares the image frame, the image frame needs to be encoded.

The first device determines encoding quality in advance. The encoding quality is used to indicate a restoration degree to which the image frame that has been encoded is restored to the image frame that has not been encoded. There is a positive correlation between encoding quality and a restoration degree. That is, as encoding quality is higher, a data volume obtained after encoding is larger, and an image frame that has been encoded can be restored to the image frame that has not been encoded to a higher restoration degree. The first device processes the image frame into I-frame data or P-frame data or B-frame data according to the encoding quality and importance of the image frame, and shares the image frame that has been encoded with the second device for displaying. The I-frame data is obtained by encoding a key frame in the image frame. The P-frame data is obtained by encoding a difference between the P-frame data and I-frame data or P-frame data before the P-frame data. The B-frame data is obtained by encoding a difference between the B-frame data and I-frame data or P-frame data before the B-frame data and a difference between the B-frame data and P-frame data after the B-frame data.

When the image frame is an image frame that is generated in a dynamic display scenario, differences between image frames are relatively great in the dynamic display scenario. In this case, if encoding quality determined is excessively high, a data volume of the image frame that has been encoded is relatively large during transmission, and a time consumed for transmitting the image frame that has been encoded is relatively long. Consequently, real-timeness of displaying by means of sharing is reduced.

US2009/327917A1 provides a method of sharing information associated with a selected application. The method comprises identifying a media type associated with the information, and capturing the information based on the media type. The method further comprises identifying a content type associated with the information, the content type being related to the media type, encoding the information based on the content type, and providing access to the encoded information over a communication network.

US2013/128948A1 describes a display-mode based video coding with adaptive switching between a simplified encoding process for image frames in static display mode and conventional encoding for image frames dynamic display mode. The display mode is determined based on whether the video data includes static content or dynamic content over a defined period of time that can be a number of consecutive frames, a number of seconds or a rolling window of frames.

US2013/050254A1 discloses a method wherein motion vectors of a video or graphics content are analyzed for the amount of motion and on detection of a significant amount of motion at least the motion video is compressed, otherwise lossless compression to compress at least the graphics is performed.

EP2785070A1 provides a method of improving quality of experience (QoE) in a first device which shares a screen of the first device with a second device by detecting a class of a content currently displayed on the screen; determining a QoE policy based on the detected class of the content; encoding a screen image of the screen based on the determined QoE policy; and transmitting the encoded screen image to the second device.

### SUMMARY

To resolve a problem that real-timeness of displaying by means of sharing is reduced when differences between image frames generated in a dynamic display scenario are relatively great and encoding quality is excessively high, embodiments of the present invention provide a data processing method and apparatus. The technical solutions are as follows:

According to a first aspect, a data processing method is provided, where the method includes:
detecting, by a first device, whether a current image frame in a display buffer is an image frame generated in a dynamic display scenario or in a static display scenario, where the dynamic display scenario is a display scenario in which an image frame dynamically changes in a preset time period, and the static display scenario is a display scenario in which an image frame remains unchanged in the preset time period;
if the current image frame is an image frame generated in the dynamic display scenario, encoding the current image frame according to first encoding quality, where the first encoding quality is used to indicate a first restoration degree to which an image frame that has been encoded is restored to the image frame that has not been encoded;
if the current image frame is an image frame generated in the static display scenario, encoding the current image frame according to second encoding quality, where the second encoding quality is used to indicate a second restoration degree to which an image frame that has been encoded is restored to the image frame that has not been encoded, and the second restoration degree is higher than the first restoration degree; and
sharing the current image frame that has been encoded with a second device for displaying, wherein after the sharing the current image frame that has been encoded with a second device for displaying, the method further includes:
if the current image frame that has been encoded is obtained by encoding the current image frame according to the first encoding quality, detecting whether displaying of the current image frame by the first device satisfies a static display condition, where the static display condition is that the displayed current image frame remains unchanged;
if displaying of the current image frame by the first device satisfies the static display condition, encoding the current image frame again according to the second encoding quality; and
sharing the current image frame that has been encoded again with the second device for displaying.

According to the first possible implementation manner of the first aspect, in a second possible implementation manner of the first aspect, the detecting whether displaying of the current image frame by the first device satisfies a static display condition includes:
obtaining duration during which the first device displays the current image frame, and detecting whether the duration is greater than a preset threshold; or
detecting whether a pause instruction is received, where the pause instruction is used to instruct the first device to stop updating the current image frame in the display buffer to a next image frame.

According to the first aspect or the first possible implementation manner of the first aspect or the second possible implementation manner of the first aspect, in a third possible implementation manner of the first aspect, the detecting, by a first device, whether a current image frame in a display buffer is an image frame generated in a dynamic display scenario or in a static display scenario includes:
determining an application program generating the current image frame, and detecting whether the application program belongs to a dynamic program list or a static program list, where the dynamic program list includes an application program providing the dynamic display scenario, and the static program list includes an application program providing the static display scenario; or
determining a control interface that is called when the current image frame is displayed, and detecting whether the control interface belongs to a dynamic interface list or a static interface list, where the dynamic interface list includes a control interface that is called in the dynamic display scenario, and the static interface list includes a control interface that is called in the static display scenario; or
detecting, by using an encoding interface called by an application program providing the current image frame, whether the current image frame is an image frame generated in the dynamic display scenario or in the static display scenario, where the encoding interface includes a first encoding interface and a second encoding interface, the first encoding interface is used to instruct to encode an image frame according to the first encoding quality, and the second encoding interface is used to instruct to encode an image frame according to the second encoding quality; or
obtaining an image frame in the display buffer that is adjacent to the current image frame, detecting whether image data respectively included in the current image frame and the adjacent image frame is the same, and when the image data is different, determining that the current image frame is an image frame generated in the dynamic display scenario, or when the image data is the same, determining that the current image frame is an image frame generated in the static display scenario; or
obtaining an image frame in the display buffer that is adjacent to the current image frame, extracting image features of a same type from the current image frame and the adjacent image frame, detecting whether the respectively obtained image features are the same, and when the image features are different, determining that the current image frame is an image frame generated in the dynamic display scenario, or when the image features are the same, determining that the current image frame is an image frame generated in the static display scenario.

According to the first aspect or the first possible implementation manner of the first aspect or the second possible implementation manner of the first aspect or the third possible implementation manner of the first aspect, in a fourth possible implementation manner of the first aspect, before the detecting, by a first device, whether a current image frame in a display buffer is an image frame generated in a dynamic display scenario or in a static display scenario, the method further includes:
obtaining a resolution of the second device; and
if the resolution of the second device is higher than a resolution of the first device, performing super-resolution processing on the current image frame.

According to the first aspect or the first possible implementation manner of the first aspect or the second possible implementation manner of the first aspect or the third possible implementation manner of the first aspect or the fourth possible implementation manner of the first aspect, in a fifth possible implementation manner of the first aspect, the method further includes:
obtaining quality of a network on which the current image frame that has been encoded is to be transmitted; and
adjusting, according to the quality of the network, an encoding parameter corresponding to the first encoding quality, or adjusting, according to the quality of the network, an encoding parameter corresponding to the second encoding quality, where there is a positive correlation between the quality of the network and a data volume of the current image frame that has been encoded, and the current image frame that has been encoded is obtained by means of encoding according to the encoding parameter.

In a sixth possible implementation manner of the first aspect, the second encoding quality is corresponding to a lossless compression manner, and the sharing the current image frame that has been encoded with a second device for displaying includes:
creating a lossless compression data channel, and sharing, by using the lossless compression data channel, the current image frame that has been encoded with the second device for displaying, where the lossless compression data channel and a lossy compression data channel are mutually independent from each other, and the lossy compression data channel is used to transmit an image frame that is obtained by means of encoding in a lossy compression manner; or
sharing, by using a lossy compression data channel corresponding to a lossy encoding protocol, the current image frame that has been encoded with the second device for displaying, where the lossy encoding protocol includes a newly added encoding protocol corresponding to the lossless compression manner, and the lossy compression data channel is used to transmit an image frame that is obtained by means of encoding by using the lossy encoding protocol.

According to a second aspect, a data processing apparatus is provided, where the apparatus includes:
an image frame detection module, used for a first device and configured to detect whether a current image frame in a display buffer is an image frame generated in a dynamic display scenario or in a static display scenario, where the dynamic display scenario is a display scenario in which an image frame dynamically changes in a preset time period, and the static display scenario is a display scenario in which an image frame remains unchanged in the preset time period;
a first encoding module, configured to: when the image frame detection module detects that the current image frame is an image frame generated in the dynamic display scenario, encode the current image frame according to first encoding quality, where the first encoding quality is used to indicate a first restoration degree to which an image frame that has been encoded is restored to the image frame that has not been encoded;
a second encoding module, configured to: when the image frame detection module detects that the current image frame is an image frame generated in the static display scenario, encode the current image frame according to second encoding quality, where the second encoding quality is used to indicate a second restoration degree to which an image frame that has been encoded is restored to the image frame that has not been encoded, and the second restoration degree is higher than the first restoration degree; and
a first sharing module, configured to share, with a second device for displaying, the current image frame that has been encoded by the first encoding module or the second encoding module,

the apparatus further including:
a display detection module, configured to: after the first sharing module shares the current image frame that has been encoded with the second device for displaying, if the current image frame that has been encoded is obtained by encoding the current image frame according to the first encoding quality, detect whether displaying of the current image frame by the first device satisfies a static display condition, where the static display condition is that the displayed current image frame remains unchanged;
a third encoding module, configured to: when the display detection module detects that displaying of the current image frame by the first device satisfies the static display condition, encode the current image frame again according to the second encoding quality; and
a second sharing module, configured to share, with the second device for displaying, the current image frame that has been encoded again by the third encoding module.

According to the first possible implementation manner of the second aspect, in a second possible implementation manner of the second aspect, the display detection module is specifically configured to:
obtain duration during which the first device displays the current image frame, and detect whether the duration is greater than a preset threshold; or
detect whether a pause instruction is received, where the pause instruction is used to instruct the first device to stop updating the current image frame in the display buffer to a next image frame.

According to the second aspect or the first possible implementation manner of the second aspect or the second possible implementation manner of the second aspect, in a third possible implementation manner of the second aspect, the image frame detection module is specifically configured to:
determine an application program generating the current image frame, and detect whether the application program belongs to a dynamic program list or a static program list, where the dynamic program list includes an application program providing the dynamic display scenario, and the static program list includes an application program providing the static display scenario; or
determine a control interface that is called when the current image frame is displayed, and detect whether the control interface belongs to a dynamic interface list or a static interface list, where the dynamic interface list includes a control interface that is called in the dynamic display scenario, and the static interface list includes a control interface that is called in the static display scenario; or
detect, by using an encoding interface called by an application program providing the current image frame, whether the current image frame is an image frame generated in the dynamic display scenario or in the static display scenario, where the encoding interface includes a first encoding interface and a second encoding interface, the first encoding interface is used to instruct to encode an image frame according to the first encoding quality, and the second encoding interface is used to instruct to encode an image frame according to the second encoding quality; or
obtain an image frame in the display buffer that is adjacent to the current image frame, detect whether image data respectively included in the current image frame and the adjacent image frame is the same, and when the image data is different, determine that the current image frame is an image frame generated in the dynamic display scenario, or when the image data is the same, determine that the current image frame is an image frame generated in the static display scenario; or
obtain an image frame in the display buffer that is adjacent to the current image frame, extract image features of a same type from the current image frame and the adjacent image frame, detect whether the respectively obtained image features are the same, and when the image features are different, determine that the current image frame is an image frame generated in the dynamic display scenario, or when the image features are the same, determine that the current image frame is an image frame generated in the static display scenario.

According to the second aspect or the first possible implementation manner of the second aspect or the second possible implementation manner of the second aspect or the third possible implementation manner of the second aspect, in a fourth possible implementation manner of the second aspect, the apparatus further includes:
an image frame processing module, configured to: before the image frame detection module detects whether the current image frame in the display buffer is an image frame generated in the dynamic display scenario or in the static display scenario, obtain a resolution of the second device; and if the resolution of the second device is higher than a resolution of the first device, perform super-resolution processing on the current image frame.

According to the second aspect or the first possible implementation manner of the second aspect or the second possible implementation manner of the second aspect or the third possible implementation manner of the second aspect or the fourth possible implementation manner of the second aspect, in a fifth possible implementation manner of the second aspect, the apparatus further includes:
a network quality obtaining module, configured to obtain quality of a network on which the current image frame that has been encoded is to be transmitted; and
a parameter adjustment module, configured to: adjust, according to the quality of the network obtained by the network quality obtaining module, an encoding parameter corresponding to the first encoding quality, or adjust, according to the quality of the network, an encoding parameter corresponding to the second encoding quality, where there is a positive correlation between the quality of the network and a data volume of the current image frame that has been encoded, and the current image frame that has been encoded is obtained by means of encoding according to the encoding parameter.

In a sixth possible implementation manner of the second aspect, the second encoding quality is corresponding to a lossless compression manner, and the first sharing module is specifically configured to:
create a lossless compression data channel, and share, by using the lossless compression data channel, the current image frame that has been encoded with the second device for displaying, where the lossless compression data channel and a lossy compression data channel are mutually independent from each other, and the lossy compression data channel is used to transmit an image frame that is obtained by means of encoding in a lossy compression manner; or
share, by using a lossy compression data channel corresponding to a lossy encoding protocol, the current image frame that has been encoded with the second device for displaying, where the lossy encoding protocol includes a newly added encoding protocol corresponding to the lossless compression manner, and the lossy compression data channel is used to transmit an image frame that is obtained by means of encoding by using the lossy encoding protocol.

According to a third aspect, a data processing apparatus is provided, where the apparatus includes a bus, and a processor, a memory, a transmitter, and a receiver that are connected to the bus, where the memory is configured to store several instructions, where the instructions are configured to be executed by the processor;
the processor is configured to detect whether a current image frame in a display buffer is an image frame generated in a dynamic display scenario or in a static display scenario, where the dynamic display scenario is a display scenario in which an image frame dynamically changes in a preset time period, and the static display scenario is a display scenario in which an image frame remains unchanged in the preset time period;
the processor is further configured to: when the current image frame is an image frame generated in the dynamic display scenario, encode the current image frame according to first encoding quality, where the first encoding quality is used to indicate a first restoration degree to which an image frame that has been encoded is restored to the image frame that has not been encoded;
the processor is further configured to: when the current image frame is an image frame generated in the static display scenario, encode the current image frame according to second encoding quality, where the second encoding quality is used to indicate a second restoration degree to which an image frame that has been encoded is restored to the image frame that has not been encoded, and the second restoration degree is higher than the first restoration degree; and
the transmitter is configured to share, with a second device for displaying, the current image frame that has been encoded by the processor, and wherein
the processor is further configured to: after the transmitter shares the current image frame that has been encoded with a second device for displaying, if the current image frame that has been encoded is obtained by encoding the current image frame according to the first encoding quality, detect whether displaying of the current image frame by the first device satisfies a static display condition, where the static display condition is that the displayed current image frame remains unchanged;
the processor is further configured to: when displaying of the current image frame by the first device satisfies the static display condition, encode the current image frame again according to the second encoding quality; and
the transmitter is further configured to share, with the second device for displaying, the current image frame that has been encoded again by the processor.

According to the first possible implementation manner of the third aspect, in a second possible implementation manner of the third aspect, the processor is specifically configured to:
obtain duration during which the first device displays the current image frame, and detect whether the duration is greater than a preset threshold; or
detect whether a pause instruction is received, where the pause instruction is used to instruct the first device to stop updating the current image frame in the display buffer to a next image frame.

According to the third aspect or the first possible implementation manner of the third aspect or the second possible implementation manner of the third aspect, in a third possible implementation manner of the third aspect, the processor is specifically configured to:
determine an application program generating the current image frame, and detect whether the application program belongs to a dynamic program list or a static program list, where the dynamic program list includes an application program providing the dynamic display scenario, and the static program list includes an application program providing the static display scenario; or
determine a control interface that is called when the current image frame is displayed, and detect whether the control interface belongs to a dynamic interface list or a static interface list, where the dynamic interface list includes a control interface that is called in the dynamic display scenario, and the static interface list includes a control interface that is called in the static display scenario; or
detect, by using an encoding interface called by an application program providing the current image frame, whether the current image frame is an image frame generated in the dynamic display scenario or in the static display scenario, where the encoding interface includes a first encoding interface and a second encoding interface, the first encoding interface is used to instruct to encode an image frame according to the first encoding quality, and the second encoding interface is used to instruct to encode an image frame according to the second encoding quality; or
obtain an image frame in the display buffer that is adjacent to the current image frame, detect whether image data respectively included in the current image frame and the adjacent image frame is the same, and when the image data is different, determine that the current image frame is an image frame generated in the dynamic display scenario, or when the image data is the same, determine that the current image frame is an image frame generated in the static display scenario; or
obtain an image frame in the display buffer that is adjacent to the current image frame, extract image features of a same type from the current image frame and the adjacent image frame, detect whether the respectively obtained image features are the same, and when the image features are different, determine that the current image frame is an image frame generated in the dynamic display scenario, or when the image features are the same, determine that the current image frame is an image frame generated in the static display scenario.

According to the third aspect or the first possible implementation manner of the third aspect or the second possible implementation manner of the third aspect or the third possible implementation manner of the third aspect, in a fourth possible implementation manner of the third aspect,
the processor is further configured to: before detecting whether a current image frame in a display buffer is an image frame generated in a dynamic display scenario or in a static display scenario, obtain a resolution of the second device; and if the resolution of the second device is higher than a resolution of the first device, perform super-resolution processing on the current image frame.

According to the third aspect or the first possible implementation manner of the third aspect or the second possible implementation manner of the third aspect or the third possible implementation manner of the third aspect or the fourth possible implementation manner of the third aspect, in a fifth possible implementation manner of the third aspect,
the processor is further configured to obtain quality of a network on which the current image frame that has been encoded is to be transmitted; and
the processor is further configured to: adjust, according to the quality of the network, an encoding parameter corresponding to the first encoding quality, or adjust, according to the quality of the network, an encoding parameter corresponding to the second encoding quality, where there is a positive correlation between the quality of the network and a data volume of the current image frame that has been encoded, and the current image frame that has been encoded is obtained by means of encoding according to the encoding parameter.

In a sixth possible implementation manner of the third aspect, the second encoding quality is corresponding to a lossless compression manner, and the transmitter is specifically configured to:
create a lossless compression data channel, and share, by using the lossless compression data channel, the current image frame that has been encoded with the second device for displaying, where the lossless compression data channel and a lossy compression data channel are mutually independent from each other, and the lossy compression data channel is used to transmit an image frame that is obtained by means of encoding in a lossy compression manner; or
share, by using a lossy compression data channel corresponding to a lossy encoding protocol, the current image frame that has been encoded with the second device for displaying, where the lossy encoding protocol includes a newly added encoding protocol corresponding to the lossless compression manner, and the lossy compression data channel is used to transmit an image frame that is obtained by means of encoding by using the lossy encoding protocol.

The technical solutions provided in the embodiments of the present invention have the following beneficial effects:

It is detected whether a current image frame in a display buffer is an image frame generated in a dynamic display scenario or in a static display scenario; if the current image frame is an image frame generated in the dynamic display scenario, the current image frame is encoded according to first encoding quality, where the first encoding quality is used to indicate a first restoration degree to which an image frame that has been encoded is restored to the image frame that has not been encoded; and if the current image frame is an image frame generated in the static display scenario, the current image frame is encoded according to second encoding quality, where the second encoding quality is used to indicate a second restoration degree to which an image frame that has been encoded is restored to the image frame that has not been encoded, and the second restoration degree is higher than the first restoration degree. In this way, when the current image frame is an image frame generated in the dynamic display scenario, the current image frame may be encoded by using the first encoding quality. Because the first restoration degree indicated by the first encoding quality is lower than the second restoration degree indicated by the second encoding quality, a data volume of the current image frame that has been encoded is smaller, thereby resolving a problem that real-timeness of displaying by means of sharing is reduced when differences between image frames generated in a dynamic display scenario are relatively great and a restoration degree indicated by encoding quality is excessively high, and achieving an effect of improving the real-timeness of displaying by means of sharing.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a method flowchart of a data processing method according to an example;
FIG. 2 is a method flowchart of a data processing method according to an embodiment of the present invention;
FIG. 3 is a schematic structural diagram of a data processing apparatus according to an example;
FIG. 4 is a schematic structural diagram of a data processing apparatus according to an embodiment of the present invention; and
FIG. 5 is a schematic structural diagram of a data processing apparatus according to an example.

### DESCRIPTION OF EMBODIMENTS

To make the objectives, technical solutions, and advantages of the present invention clearer, the following further describes examples and the embodiments of the present invention in detail with reference to the accompanying drawings.

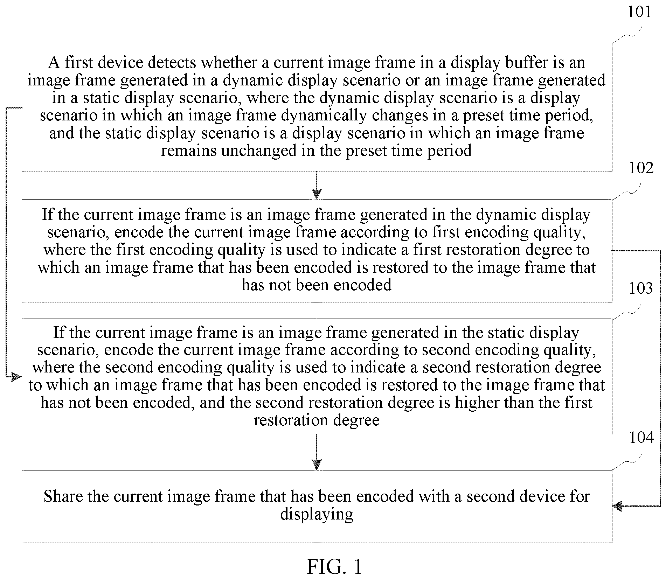

Referring to FIG. 1, FIG. 1 is a method flowchart of a data processing method according to an example. The data processing method may include:
Step 101: A first device detects whether a current image frame in a display buffer is an image frame generated in a dynamic display scenario or in a static display scenario, where the dynamic display scenario is a display scenario in which an image frame dynamically changes in a preset time period, and the static display scenario is a display scenario in which an image frame remains unchanged in the preset time period.
Step 102: If the current image frame is an image frame generated in the dynamic display scenario, encode the current image frame according to first encoding quality, where the first encoding quality is used to indicate a first restoration degree to which an image frame that has been encoded is restored to the image frame that has not been encoded.
Step 103: If the current image frame is an image frame generated in the static display scenario, encode the current image frame according to second encoding quality, where the second encoding quality is used to indicate a second restoration degree to which an image frame that has been encoded is restored to the image frame that has not been encoded, and the second restoration degree is higher than the first restoration degree.
Step 104: Share the current image frame that has been encoded with a second device for displaying.

To sum up, by means of the data processing method provided in this example, it is detected whether a current image frame in a display buffer is an image frame generated in a dynamic display scenario or in a static display scenario; if the current image frame is an image frame generated in the dynamic display scenario, the current image frame is encoded according to first encoding quality, where the first encoding quality is used to indicate a first restoration degree to which an image frame that has been encoded is restored to the image frame that has not been encoded; and if the current image frame is an image frame generated in the static display scenario, the current image frame is encoded according to second encoding quality, where the second encoding quality is used to indicate a second restoration degree to which an image frame that has been encoded is restored to the image frame that has not been encoded, and the second restoration degree is higher than the first restoration degree. In this way, when the current image frame is an image frame generated in the dynamic display scenario, the current image frame may be encoded by using the first encoding quality. Because the first restoration degree indicated by the first encoding quality is lower than the second restoration degree indicated by the second encoding quality, a data volume of the current image frame that has been encoded is smaller, thereby resolving a problem that real-timeness of displaying by means of sharing is reduced when differences between image frames generated in a dynamic display scenario are relatively great and a restoration degree indicated by encoding quality is excessively high, and achieving an effect of improving the real-timeness of displaying by means of sharing.

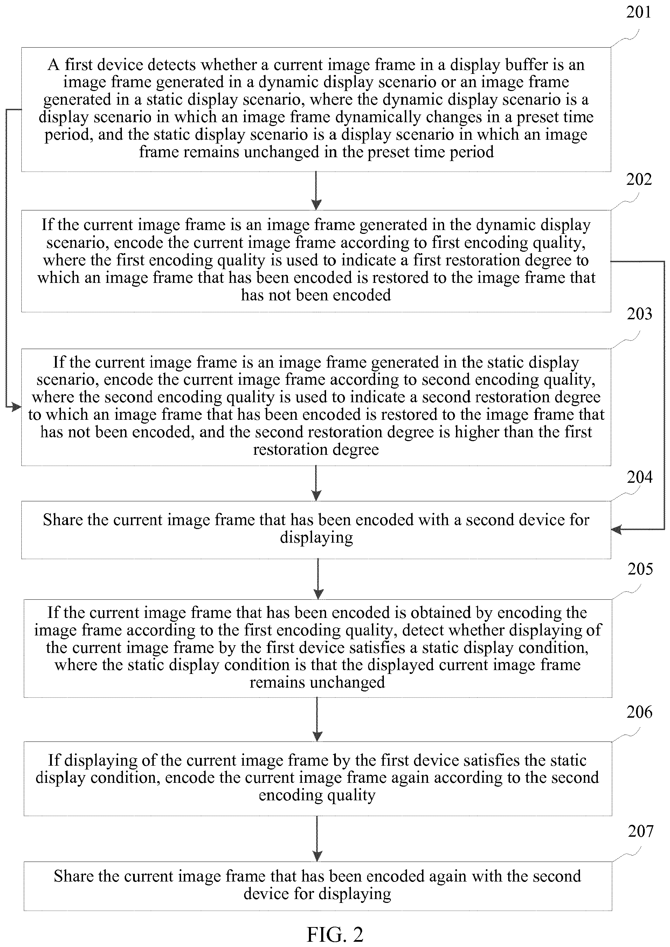

Referring to FIG. 2, FIG. 2 is a method flowchart of a data processing method according to an embodiment of the present invention. The data processing method includes the following steps.

Step 201: A first device detects whether a current image frame in a display buffer is an image frame generated in a dynamic display scenario or in a static display scenario, where the dynamic display scenario is a display scenario in which an image frame dynamically changes in a preset time period, and the static display scenario is a display scenario in which an image frame remains unchanged in the preset time period.

The display buffer is a buffer that is used to store an image frame currently displayed by the first device. The current image frame may be a screenshot of a file currently displayed by the first device. For example, the file may be a text, a picture, a web page, a slide, a desktop, a video, or a game.

Generally, the display buffer may buffer three image frames, and buffering duration of an image frame in the display buffer is related to a type of the display buffer and a type of the file. The type of the display buffer includes a fixed type and a refreshing type. A difference thereof is as follows: When the first device continuously displays a picture, an image frame buffered in a display buffer of the fixed type remains unchanged, that is, the image frame displayed by the first device is continuously buffered in the display buffer. However, an image frame buffered in a display buffer of the refreshing type is periodically refreshed to a same image frame, that is, the image frame displayed by the first device is periodically refreshed to a next same image frame.

For ease of understanding, for example, the file is a video and 25 image frames of the video are displayed in 1 second in description of this embodiment. When the first device normally plays the video, buffering duration during which each image frame stays in the display buffer is 25/60 second. When the first device pauses the video, buffering duration during which an image frame displayed when the first device pauses stays in the display buffer of the fixed type is equal to pause duration, and buffering duration during which each same image frame displayed when the first device pauses stays in the display buffer of the refreshing type is 25/60 second.

The dynamic display scenario is a display scenario in which an image frame dynamically changes in a preset time period, for example, turning a page of a text in a preset time period, turning a page of slides in a preset time period, refreshing a web page in a preset time period, playing a video in a preset time period, refreshing a game picture in a preset time period, refreshing a desktop icon in a preset time period, or refreshing a desktop button in a preset time period. The static display scenario is a display scenario in which an image frame remains unchanged in a preset time period, for example, displaying a picture in a preset time period or displaying a web page in a preset time period. The preset time period may be an empirical value set by a user, or may be another value. This is not limited in this embodiment.

In this embodiment, the detecting, by a first device, whether a current image frame in a display buffer is an image frame generated in a dynamic display scenario or in a static display scenario includes:
1) determining an application program generating the current image frame, and detecting whether the application program belongs to a dynamic program list or a static program list, where the dynamic program list includes an application program providing the dynamic display scenario, and the static program list includes an application program providing the static display scenario; or
2) determining a control interface that is called when the current image frame is displayed, and detecting whether the control interface belongs to a dynamic interface list or a static interface list, where the dynamic interface list includes a control interface that is called in the dynamic display scenario, and the static interface list includes a control interface that is called in the static display scenario; or
3) detecting, by using an encoding interface called by an application program providing the current image frame, whether the current image frame is an image frame generated in the dynamic display scenario or in the static display scenario, where the encoding interface includes a first encoding interface and a second encoding interface, the first encoding interface is used to instruct to encode an image frame according to the first encoding quality, and the second encoding interface is used to instruct to encode an image frame according to the second encoding quality; or
4) obtaining an image frame in the display buffer that is adjacent to the current image frame, detecting whether image data respectively included in the current image frame and the adjacent image frame is the same, and when the image data is different, determining that the current image frame is an image frame generated in the dynamic display scenario, or when the image data is the same, determining that the current image frame is an image frame generated in the static display scenario; or
5) obtaining an image frame in the display buffer that is adjacent to the current image frame, extracting image features of a same type from the current image frame and the adjacent image frame, detecting whether the respectively obtained image features are the same, and when the image features are different, determining that the current image frame is an image frame generated in the dynamic display scenario, or when the image features are the same, determining that the current image frame is an image frame generated in the static display scenario.

In the first detection method, the user may preset a dynamic program list and a static program list, and then add an application program to a corresponding list according to a function implemented by the application program. The dynamic program list includes an application program providing the dynamic display scenario, and the static program list includes an application program providing the static display scenario. For example, a player is used to play a video, and video playback is a dynamic display scenario, and the player may be added to the dynamic program list. For another example, a game is a dynamic display scenario, and a game program may be added to the dynamic program list.

In this embodiment, a user may obtain the dynamic program list and the static program list by manually classifying application programs. Alternatively, program types respectively corresponding to the dynamic program list and the static program list may be preset, and an application program of a particular type may be automatically added to a corresponding list. The program type may be set by a developer, or may be set by an application store, or may be manually set by the user.

The program type may include a text type, an image type, and a video type. An application program such as a reader or a text editor may belong to the text type, an application program such as a picture viewer or a picture editor may belong to the image type, and an application program such as a player or a game may belong to the video type. Assuming that the video type is corresponding to the dynamic program list, an application program such as a player or a game may be automatically added to the dynamic program list.

Because the current image frame is generated by an application program, the first device may determine the application program generating the current image frame. If the application program belongs to the dynamic program list, the first device determines that the current image frame is an image frame generated in the dynamic display scenario. If the application program belongs to the static program list, the first device determines that the current image frame is an image frame generated in the static display scenario.

Optionally, the first device may detect whether each current image frame is an image frame generated in a dynamic display scenario or in a static display scenario. Relatively many processing resources need to be consumed to detect each current image frame. Therefore, the first device may also detect whether an image frame in an image frame sequence generated by an application program is an image frame generated in a dynamic display scenario or in a static display scenario. If the image frame is an image frame generated in a dynamic display scenario, the first device determines that each image frame in the image frame sequence is an image frame generated in a dynamic display scenario. If the image frame is an image frame generated in a static display scenario, the first device determines that each image frame in the image frame sequence is an image frame generated in a static display scenario.

In the second detection method, the user may preset a dynamic interface list or a static interface list, where the dynamic interface list includes a control interface that is called in the dynamic display scenario, and the static interface list includes a control interface that is called in the static display scenario. For example, a control interface that is called when a system of the first device creates an animation and the animation is displayed in the foreground may be added to the dynamic interface list. The system may detect creation and end of the animation.

Because a control interface needs to be called when the current image frame is displayed, the first device may detect whether the control interface belongs to the dynamic interface list or the static interface list. If the control interface belongs to the dynamic interface list, the first device determines that the current image frame is an image frame generated in the dynamic display scenario. If the control interface belongs to the static interface list, the first device determines that the current image frame is an image frame generated in the static display scenario.

In the third detection method, an encoding interface may be newly added to a system, where the encoding interface includes a first encoding interface that is used to instruct to encode an image frame according to the first encoding quality, and a second encoding interface that is used to instruct to encode an image frame according to the second encoding quality.

When an application program calls an encoding interface to encode the current image frame, whether the current image frame is an image frame generated in a dynamic display scenario or in a static display scenario may be determined according to the encoding interface called by the application program. Specifically, when the application program calls the first encoding interface to encode the current image frame, it is determined that the current image frame is an image frame generated in the dynamic display scenario. When the application program calls the second encoding interface to encode the current image frame, it is determined that the current image frame is an image frame generated in the static display scenario.

In the fourth detection method, all image data respectively included in the current image frame in the display buffer and an image frame in the display buffer that is adjacent to the current image frame may be obtained. It is detected whether all the image data is the same. If all the image data is different, it is determined that the current image frame is an image frame generated in the dynamic display scenario. If all the image data is the same, it is determined that the current image frame is an image frame generated in the static display scenario. The image data is a set that is obtained after a grayscale value of each pixel in the image frame is represented by using a numerical value.

The first device performs overall comparison on the current image frame and the image frame adjacent to the current image frame. A data volume included in the image data is relatively large, and relatively many processing resources need to be consumed when all the image data is compared. Therefore, features of the image frames may be extracted, and whether the current image frame is an image frame generated in a dynamic display scenario or in a static display scenario may be detected according to the obtained image features. A data volume of the image features is relatively small. Therefore, a processing resource may be saved. The image features may be a part of the image data of the image frames, or may be digest information generated for the image frame by using a particular algorithm, or may be other information. The image features are not limited in this embodiment.

In the fifth detection method, an algorithm for feature extraction may be determined in advance. An image frame in the display buffer that is adjacent to the current image frame may be obtained. A feature of each of the current image frame and the adjacent image frame may be respectively extracted to obtain two image features of a same type. Whether the two image features are the same may be detected. If the two image features are different, it is determined that the current image frame is an image frame generated in the dynamic display scenario. If the two image features are the same, it is determined that the current image frame is an image frame generated in the static display scenario.

Certainly, in addition to the foregoing five detection methods, whether the current image frame is an image frame generated in the dynamic display scenario or in the static display scenario may also be detected by using another method. This is not limited in this embodiment.

It should be noted that, the first device may also provide options of the dynamic display scenario and the static display scenario to the user. When the user selects the option of the dynamic display scenario, the first device determines that the current image frame is an image frame generated in the dynamic display scenario. When the user selects the option of the static display scenario, the first device determines that the current image frame is an image frame generated in the static display scenario.

In this embodiment, before the detecting, by a first device, whether a current image frame in a display buffer is an image frame generated in a dynamic display scenario or in a static display scenario, the method further includes: obtaining a resolution of the second device; and if the resolution of the second device is higher than a resolution of the first device, performing super-resolution processing on the current image frame.

Specifically, after establishing a connection to the first device, the second device may send the resolution of the second device to the first device by using the connection. Alternatively, the user may set the resolution of the second device in the first device. A manner of obtaining the resolution of the second device is not limited in this embodiment.

The super-resolution processing may be performed by using a non-linear dynamic stretching algorithm or another super-resolution algorithm. A process of the processing is already quite mature, and details are not described herein again.

Assuming that a processing capability of the first device is stronger than that of the second device, the first device performs super-resolution processing on the current image frame instead of the second device. In this way, processing efficiency for the current image frame can be improved.

Step 202: If the current image frame is an image frame generated in the dynamic display scenario, encode the current image frame according to first encoding quality, where the first encoding quality is used to indicate a first restoration degree to which an image frame that has been encoded is restored to the image frame that has not been encoded.

In the dynamic display scenario, a displayed image frame is updated relatively quickly. In this case, it needs to be ensured that an image frame is displayed in real time. That is, the first electronic device may encode the current image frame by using the worse first encoding quality, and reduce a data volume of the current image frame by using the first encoding quality, and therefore improve real-timeness of displaying the current image frame. The first encoding quality is used to indicate the first restoration degree to which an image frame that has been encoded is restored to the image frame that has not been encoded. A restoration degree generally refers to a similarity between an image frame after restoration and an image frame before restoration.

It should be noted that, this embodiment further provides third encoding quality. The third encoding quality is used to indicate a third restoration degree to which an image frame that has been encoded is restored to the image frame that has not been encoded. A second restoration degree is higher than the third restoration degree, and the third restoration degree is higher than the first restoration degree. When the current image frame is an image frame in an interactive dynamic display scenario such as showing a slide, turning a page of a text, or updating a web page, the current image frame may be encoded according to the first encoding quality. When the current image frame is an image frame in a dynamic display scenario such as a video or an animation, the current image frame may be encoded according to the third encoding quality.

Step 203: If the current image frame is an image frame generated in the static display scenario, encode the current image frame according to second encoding quality, where the second encoding quality is used to indicate a second restoration degree to which an image frame that has been encoded is restored to the image frame that has not been encoded, and the second restoration degree is higher than the first restoration degree.

In the static display scenario, a displayed image frame remains unchanged. In this case, a display effect of the image frame needs to be ensured. That is, the first electronic device may encode the current image frame by using the better second encoding quality, and increase a data volume of the current image frame by using the second encoding quality, and therefore improve a display effect of the current image frame.

Step 204: Share the current image frame that has been encoded with a second device for displaying.

The first electronic device shares the current image frame that has been encoded in step 202 or step 203 with the second device. The second device decodes and displays the current image frame that has been encoded.

In this embodiment, the second encoding quality is corresponding to a lossless compression manner, and the sharing the current image frame that has been encoded with a second device for displaying includes:
1) creating a lossless compression data channel, and sharing, by using the lossless compression data channel, the current image frame that has been encoded with the second device for displaying, where the lossless compression data channel and a lossy compression data channel are mutually independent from each other, and the lossy compression data channel is used to transmit an image frame that is obtained by means of encoding in a lossy compression manner; or
2) sharing, by using a lossy compression data channel corresponding to a lossy encoding protocol, the current image frame that has been encoded with the second device for displaying, where the lossy encoding protocol includes a newly added encoding protocol corresponding to the lossless compression manner, and the lossy compression data channel is used to transmit an image frame that is obtained by means of encoding by using the lossy encoding protocol.

A dedicated transmission technology cannot be used in some regions to transmit lossless compression data. Consequently, a use range of a lossless compression manner is limited. To resolve this problem, this embodiment provides two methods for transmitting lossless compression data. The methods are specifically as follows:

In a first transmission manner, a lossless compression data channel may be newly added in an existing scenario in which only a lossy compression data channel exists. That is, a lossy compression data channel and a lossless compression data channel that are mutually independent from each other are set. The lossy compression data channel is used to transmit an image frame that is obtained by means of encoding by using a lossy encoding protocol. The lossless compression data channel is used to transmit lossless compression data that is obtained by means of encoding by using a lossless encoding protocol.

In a second transmission manner, an encoding protocol corresponding to a lossless compression manner may be set, to instruct the first device to perform encoding in a lossless compression manner, and then the encoding protocol is added to a lossy encoding protocol. That is, in addition to an I frame, a P frame, and a B frame that are obtained in a lossy compression manner, the lossy encoding protocol further supports a lossless frame. The lossless frame is an image frame that is obtained by encoding an image frame in a lossless compression manner. In this case, the lossless frame may be transmitted by using a lossy compression data channel corresponding to the lossy encoding protocol.

Step 205: If the current image frame that has been encoded is obtained by encoding the image frame according to the first encoding quality, detect whether displaying of the current image frame by the first device satisfies a static display condition, where the static display condition is that the displayed current image frame remains unchanged.

If the current image frame that has been encoded is obtained by encoding the image frame according to the first encoding quality, a data volume of the current image frame that has been encoded is relatively small, and a display effect is relatively poor. If the user is interested in the current image frame that has been encoded, the display effect of the current image frame that has been encoded needs to be improved. Whether the user is interested in the current image frame that has been encoded may be determined by detecting whether displaying of the current image frame by the first device satisfies the static display condition, where the static display condition is that the displayed current image frame remains unchanged.

Specifically, the detecting whether displaying of the current image frame by the first device satisfies a static display condition includes:
1) obtaining duration during which the first device displays the current image frame, and detecting whether the duration is greater than a preset threshold; or
2) detecting whether a pause instruction is received, where the pause instruction is used to instruct the first device to stop updating the current image frame in the display buffer to a next image frame.

In the first detection method, the user may control duration during which the current image frame is displayed. When the user is interested in a particular image frame, the user may control the first device to display the image frame for a long time. Therefore, the first device may detect whether the duration during which the current image frame is displayed is greater than the preset threshold. If the duration during which the current image frame is displayed is greater than the preset threshold, the first device determines that the user is interested in the current image frame, that is, displaying of the current image frame by the first device satisfies the static display condition. If the duration during which the current image frame is displayed is less than the preset threshold, the first device determines that the user is not interested in the current image frame, that is, displaying of the current image frame by the first device does not satisfy the static display condition.

For example, the image frame is a slide, and the user controls, by triggering a page flip instruction, the first device to switch a currently displayed slide to a next slide. In this case, after receiving a page flip instruction, the first device may switch a previous slide to the current slide, and start timing. If a time reaches a preset threshold and no page flip instruction is received, displaying of the slide by the first device satisfies the static display condition. If a page flip instruction is received before the time reaches the preset threshold, displaying of the slide by the first device does not satisfy the static display condition.

In the second detection method, the first device switches the current image frame to a next image frame at a preset time interval. When the user is interested in a particular image frame, the user may control the first device to display the image frame for a long time. Therefore, the first device may detect whether a pause instruction is received. If the first device receives a pause instruction, the first device determines that the user is interested in the current image frame, that is, displaying of the current image frame by the first device satisfies the static display condition. If the first device receives no pause instruction, the first device determines that the user is not interested in the current image frame, that is, displaying of the current image frame by the first device does not satisfy the static display condition.

For example, the image frame is a slide, and a currently displayed slide is switched to a next slide at a preset time interval. In this case, the first device may start timing after displaying a slide, and detect whether a pause instruction is received within the time interval. If a pause instruction is received within the time interval, displaying of the slide by the first device satisfies the static display condition. If no pause instruction is received within the time interval, displaying of the slide by the first device does not satisfy the static display condition.

Step 206: If displaying of the current image frame by the first device satisfies the static display condition, encode the current image frame again according to the second encoding quality.

Step 207: Share the current image frame that has been encoded again with the second device for displaying.

It should be noted that, the first device may also encode partial content in the current image frame according to the second encoding quality, and share the partial content that has been encoded with the second device for displaying. For example, the partial content may be an animation embedded in a website, a change of an interface button, or the like.

Because the first device updates only the partial content in the current image frame, instead of updating the entire current image frame, both a time consumed for encoding, and a time consumed for transmitting data that has been encoded can be reduced, thereby improving real-timeness of displaying by means of sharing.

When the second encoding quality is corresponding to a lossless compression manner, for a process of sharing the current image frame that has been encoded again with the second device, refer to the description in step 204, and details are not described herein again.

Optionally, the data processing method provided in this embodiment further includes:
1) obtaining quality of a network on which the current image frame that has been encoded is to be transmitted; and
2) adjusting, according to the quality of the network, an encoding parameter corresponding to the first encoding quality, or adjusting, according to the quality of the network, an encoding parameter corresponding to the second encoding quality, where there is a positive correlation between the quality of the network and a data volume of the current image frame that has been encoded, and the current image frame that has been encoded is obtained by means of encoding according to the encoding parameter.

In this embodiment, the first device may also adjust, according to the quality of the network, the encoding parameter corresponding to the first encoding quality, or adjust, according to the quality of the network, the encoding parameter corresponding to the second encoding quality, so as to adjust the data volume of the current image frame while ensuring encoding quality. A technology for obtaining the quality of the network by the first device is already quite mature, and details are not described herein again.

For example, when the quality of the network is relatively good, lossy compression with highest quality may be adjusted to lossless compression, to improve a display effect. When the quality of the network is relatively poor, a quantity of key frames may be decreased to reduce a data volume and improve real-timeness of displaying by means of sharing.

To sum up, by means of the data processing method provided in this embodiment of the present invention, it is detected whether a current image frame in a display buffer is an image frame generated in a dynamic display scenario or in a static display scenario; if the current image frame is an image frame generated in the dynamic display scenario, the current image frame is encoded according to first encoding quality, where the first encoding quality is used to indicate a first restoration degree to which an image frame that has been encoded is restored to the image frame that has not been encoded; and if the current image frame is an image frame generated in the static display scenario, the current image frame is encoded according to second encoding quality, where the second encoding quality is used to indicate a second restoration degree to which an image frame that has been encoded is restored to the image frame that has not been encoded, and the second restoration degree is higher than the first restoration degree. In this way, when the current image frame is an image frame generated in the dynamic display scenario, the current image frame may be encoded by using the first encoding quality. Because the first restoration degree indicated by the first encoding quality is lower than the second restoration degree indicated by the second encoding quality, a data volume of the current image frame that has been encoded is smaller, thereby resolving a problem that real-timeness of displaying by means of sharing is reduced when differences between image frames generated in the dynamic display scenario are relatively great and a restoration degree indicated by encoding quality is excessively high, and achieving an effect of improving the real-timeness of displaying by means of sharing.

In addition, when displaying of the current image frame by a first device satisfies a static display condition, the current image frame is encoded again according to the second encoding quality, and the current image frame that has been encoded again is shared with a second device for displaying. In this way, when a user is interested in the displayed current image frame, the current image frame may be encoded again by using the second encoding quality and shared again, to improve an effect of displaying the current image frame by the second device.

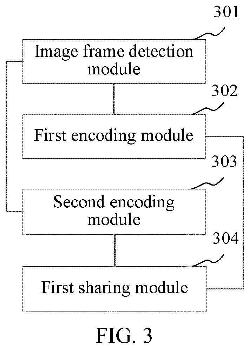

Referring to FIG. 3, FIG. 3 is a schematic structural diagram of a data processing apparatus according to an example. The data processing apparatus may include:
an image frame detection module 301, used for a first device and configured to detect whether a current image frame in a display buffer is an image frame generated in a dynamic display scenario or in a static display scenario, where the dynamic display scenario is a display scenario in which an image frame dynamically changes in a preset time period, and the static display scenario is a display scenario in which an image frame remains unchanged in the preset time period;
a first encoding module 302, configured to: when the image frame detection module 301 detects that the current image frame is an image frame generated in the dynamic display scenario, encode the current image frame according to first encoding quality, where the first encoding quality is used to indicate a first restoration degree to which an image frame that has been encoded is restored to the image frame that has not been encoded;
a second encoding module 303, configured to: when the image frame detection module 301 detects that the current image frame is an image frame generated in the static display scenario, encode the current image frame according to second encoding quality, where the second encoding quality is used to indicate a second restoration degree to which an image frame that has been encoded is restored to the image frame that has not been encoded, and the second restoration degree is higher than the first restoration degree; and
a first sharing module 304, configured to share, with a second device for displaying, the current image frame that has been encoded by the first encoding module 302 or the second encoding module 303.

To sum up, by means of the data processing apparatus provided in this example, it is detected whether a current image frame in a display buffer is an image frame generated in a dynamic display scenario or in a static display scenario; if the current image frame is an image frame generated in the dynamic display scenario, the current image frame is encoded according to first encoding quality, where the first encoding quality is used to indicate a first restoration degree to which an image frame that has been encoded is restored to the image frame that has not been encoded; and if the current image frame is an image frame generated in the static display scenario, the current image frame is encoded according to second encoding quality, where the second encoding quality is used to indicate a second restoration degree to which an image frame that has been encoded is restored to the image frame that has not been encoded, and the second restoration degree is higher than the first restoration degree. In this way, when the current image frame is an image frame generated in the dynamic display scenario, the current image frame may be encoded by using the first encoding quality. Because the first restoration degree indicated by the first encoding quality is lower than the second restoration degree indicated by the second encoding quality, a data volume of the current image frame that has been encoded is smaller, thereby resolving a problem that real-timeness of displaying by means of sharing is reduced when differences between image frames generated in a dynamic display scenario are relatively great and a restoration degree indicated by encoding quality is excessively high, and achieving an effect of improving the real-timeness of displaying by means of sharing.

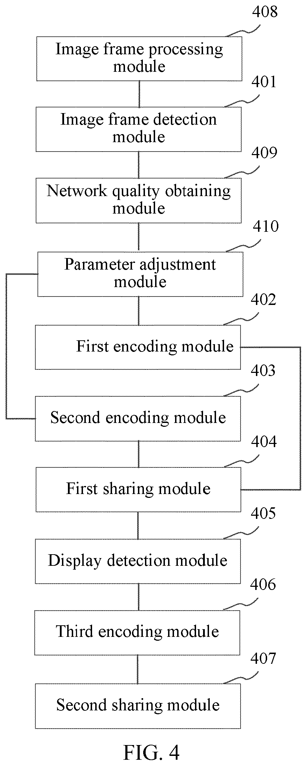

Referring to FIG. 4, FIG. 4 is a schematic structural diagram of a data processing apparatus according to an embodiment of the present invention. The data processing apparatus includes:
an image frame detection module 401, used for a first device and configured to detect whether a current image frame in a display buffer is an image frame generated in a dynamic display scenario or in a static display scenario, where the dynamic display scenario is a display scenario in which an image frame dynamically changes in a preset time period, and the static display scenario is a display scenario in which an image frame remains unchanged in the preset time period;
a first encoding module 402, configured to: when the image frame detection module 401 detects that the current image frame is an image frame generated in the dynamic display scenario, encode the current image frame according to first encoding quality, where the first encoding quality is used to indicate a first restoration degree to which an image frame that has been encoded is restored to the image frame that has not been encoded;
a second encoding module 403, configured to: when the image frame detection module 401 detects that the current image frame is an image frame generated in the static display scenario, encode the current image frame according to second encoding quality, where the second encoding quality is used to indicate a second restoration degree to which an image frame that has been encoded is restored to the image frame that has not been encoded, and the second restoration degree is higher than the first restoration degree; and
a first sharing module 404, configured to share, with a second device for displaying, the current image frame that has been encoded by the first encoding module 402 or the second encoding module 403.

The apparatus further includes:
a display detection module 405, configured to: after the first sharing module 404 shares the current image frame that has been encoded with the second device for displaying, if the current image frame that has been encoded is obtained by encoding the current image frame according to the first encoding quality, detect whether displaying of the current image frame by the first device satisfies a static display condition, where the static display condition is that the displayed current image frame remains unchanged;
a third encoding module 406, configured to: when the display detection module 405 detects that displaying of the current image frame by the first device satisfies the static display condition, encode the current image frame again according to the second encoding quality; and
a second sharing module 407, configured to share, with the second device for displaying, the current image frame that has been encoded again by the third encoding module 406.

Optionally, the display detection module 405 is specifically configured to:
obtain duration during which the first device displays the current image frame, and detect whether the duration is greater than a preset threshold; or
detect whether a pause instruction is received, where the pause instruction is used to instruct the first device to stop updating the current image frame in the display buffer to a next image frame.

Optionally, the image frame detection module 401 is specifically configured to:
determine an application program generating the current image frame, and detect whether the application program belongs to a dynamic program list or a static program list, where the dynamic program list includes an application program providing the dynamic display scenario, and the static program list includes an application program providing the static display scenario; or
determine a control interface that is called when the current image frame is displayed, and detect whether the control interface belongs to a dynamic interface list or a static interface list, where the dynamic interface list includes a control interface that is called in the dynamic display scenario, and the static interface list includes a control interface that is called in the static display scenario; or
detect, by using an encoding interface called by an application program providing the current image frame, whether the current image frame is an image frame generated in the dynamic display scenario or in the static display scenario, where the encoding interface includes a first encoding interface and a second encoding interface, the first encoding interface is used to instruct to encode an image frame according to the first encoding quality, and the second encoding interface is used to instruct to encode an image frame according to the second encoding quality; or
obtain an image frame in the display buffer that is adjacent to the current image frame, detect whether image data respectively included in the current image frame and the adjacent image frame is the same, and when the image data is different, determine that the current image frame is an image frame generated in the dynamic display scenario, or when the image data is the same, determine that the current image frame is an image frame generated in the static display scenario; or
obtain an image frame in the display buffer that is adjacent to the current image frame, extract image features of a same type from the current image frame and the adjacent image frame, detect whether the respectively obtained image features are the same, and when the image features are different, determine that the current image frame is an image frame generated in the dynamic display scenario, or when the image features are the same, determine that the current image frame is an image frame generated in the static display scenario.

Optionally, the apparatus further includes:
an image frame processing module 408, configured to: before the image frame detection module 401 detects whether the current image frame in the display buffer is an image frame generated in the dynamic display scenario or in the static display scenario, obtain a resolution of the second device; and if the resolution of the second device is higher than a resolution of the first device, perform super-resolution processing on the current image frame.

Optionally, the apparatus further includes:
a network quality obtaining module 409, configured to obtain quality of a network on which the current image frame that has been encoded is to be transmitted; and
a parameter adjustment module 410, configured to: adjust, according to the quality of the network obtained by the network quality obtaining module 409, an encoding parameter corresponding to the first encoding quality, or adjust, according to the quality of the network, an encoding parameter corresponding to the second encoding quality, where there is a positive correlation between the quality of the network and a data volume of the current image frame that has been encoded, and the current image frame that has been encoded is obtained by means of encoding according to the encoding parameter.

Optionally, the second encoding quality is corresponding to a lossless compression manner, and the first sharing module 404 is specifically configured to:
create a lossless compression data channel, and share, by using the lossless compression data channel, the current image frame that has been encoded with the second device for displaying, where the lossless compression data channel and a lossy compression data channel are mutually independent from each other, and the lossy compression data channel is used to transmit an image frame that is obtained by means of encoding in a lossy compression manner; or
share, by using a lossy compression data channel corresponding to a lossy encoding protocol, the current image frame that has been encoded with the second device for displaying, where the lossy encoding protocol includes a newly added encoding protocol corresponding to the lossless compression manner, and the lossy compression data channel is used to transmit an image frame that is obtained by means of encoding by using the lossy encoding protocol.

To sum up, by means of the data processing apparatus provided in this embodiment of the present invention, it is detected whether a current image frame in a display buffer is an image frame generated in a dynamic display scenario or in a static display scenario; if the current image frame is an image frame generated in the dynamic display scenario, the current image frame is encoded according to first encoding quality, where the first encoding quality is used to indicate a first restoration degree to which an image frame that has been encoded is restored to the image frame that has not been encoded; and if the current image frame is an image frame generated in the static display scenario, the current image frame is encoded according to second encoding quality, where the second encoding quality is used to indicate a second restoration degree to which an image frame that has been encoded is restored to the image frame that has not been encoded, and the second restoration degree is higher than the first restoration degree. In this way, when the current image frame is an image frame generated in the dynamic display scenario, the current image frame may be encoded by using the first encoding quality. Because the first restoration degree indicated by the first encoding quality is lower than the second restoration degree indicated by the second encoding quality, a data volume of the current image frame that has been encoded is smaller, thereby resolving a problem that real-timeness of displaying by means of sharing is reduced when differences between image frames generated in a dynamic display scenario are relatively great and a restoration degree indicated by encoding quality is excessively high, and achieving an effect of improving the real-timeness of displaying by means of sharing.

In addition, when displaying of the current image frame by a first device satisfies a static display condition, the current image frame is encoded again according to the second encoding quality, and the current image frame that has been encoded again is shared with a second device for displaying. In this way, when a user is interested in the displayed current image frame, the current image frame may be encoded again by using the second encoding quality and shared again, to improve a display effect of the current image frame by the second device.

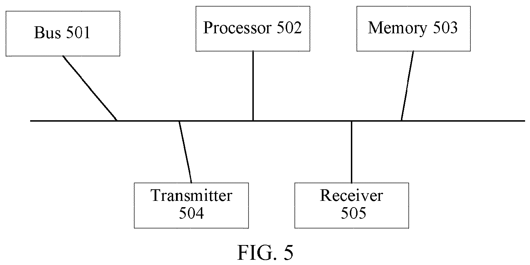

Referring to FIG. 5, FIG. 5 is a schematic structural diagram of a data processing apparatus according to an example. The data processing apparatus may include a bus 501, and a processor 502, a memory 503, a transmitter 504, and a receiver 505 that are connected to the bus 501. The memory 503 is configured to store several instructions, where the instructions are configured to be executed by the processor 502.

The processor 502 is configured to detect whether a current image frame in a display buffer is an image frame generated in a dynamic display scenario or in a static display scenario, where the dynamic display scenario is a display scenario in which an image frame dynamically changes in a preset time period, and the static display scenario is a display scenario in which an image frame remains unchanged in the preset time period.

The processor 502 is further configured to: when the current image frame is an image frame generated in the dynamic display scenario, encode the current image frame according to first encoding quality, where the first encoding quality is used to indicate a first restoration degree to which an image frame that has been encoded is restored to the image frame that has not been encoded.

The processor 502 is further configured to: when the current image frame is an image frame generated in the static display scenario, encode the current image frame according to second encoding quality, where the second encoding quality is used to indicate a second restoration degree to which an image frame that has been encoded is restored to the image frame that has not been encoded, and the second restoration degree is higher than the first restoration degree.

The transmitter 504 is configured to share, with a second device for displaying, the current image frame that has been encoded by the processor 502.

To sum up, by means of the data processing apparatus provided in this example, it is detected whether a current image frame in a display buffer is an image frame generated in a dynamic display scenario or in a static display scenario; if the current image frame is an image frame generated in the dynamic display scenario, the current image frame is encoded according to first encoding quality, where the first encoding quality is used to indicate a first restoration degree to which an image frame that has been encoded is restored to the image frame that has not been encoded; and if the current image frame is an image frame generated in the static display scenario, the current image frame is encoded according to second encoding quality, where the second encoding quality is used to indicate a second restoration degree to which an image frame that has been encoded is restored to the image frame that has not been encoded, and the second restoration degree is higher than the first restoration degree. In this way, when the current image frame is an image frame generated in the dynamic display scenario, the current image frame may be encoded by using the first encoding quality. Because the first restoration degree indicated by the first encoding quality is lower than the second restoration degree indicated by the second encoding quality, a data volume of the current image frame that has been encoded is smaller, thereby resolving a problem that real-timeness of displaying by means of sharing is reduced when differences between image frames generated in the dynamic display scenario are relatively great and a restoration degree indicated by encoding quality is excessively high, and achieving an effect of improving the real-timeness of displaying by means of sharing.

Referring to FIG. 5, an example provides another data processing apparatus. The data processing apparatus may include a bus 501, and a processor 502, a memory 503, a transmitter 504, and a receiver 505 that are connected to the bus 501. The memory 503 is configured to store several instructions, where the instructions are configured to be executed by the processor 502.

The processor 502 is configured to detect whether a current image frame in a display buffer is an image frame generated in a dynamic display scenario or in a static display scenario, where the dynamic display scenario is a display scenario in which an image frame dynamically changes in a preset time period, and the static display scenario is a display scenario in which an image frame remains unchanged in the preset time period.

The processor 502 is further configured to: when the current image frame is an image frame generated in the dynamic display scenario, encode the current image frame according to first encoding quality, where the first encoding quality is used to indicate a first restoration degree to which an image frame that has been encoded is restored to the image frame that has not been encoded.

The processor 502 is further configured to: when the current image frame is an image frame generated in the static display scenario, encode the current image frame according to second encoding quality, where the second encoding quality is used to indicate a second restoration degree to which an image frame that has been encoded is restored to the image frame that has not been encoded, and the second restoration degree is higher than the first restoration degree.

The transmitter 504 is configured to share, with a second device for displaying, the current image frame that has been encoded by the processor 502.

Optionally, the processor 502 is further configured to: after the transmitter 504 shares the current image frame that has been encoded with a second device for displaying, if the current image frame that has been encoded is obtained by encoding the current image frame according to the first encoding quality, detect whether displaying of the current image frame by the first device satisfies a static display condition, where the static display condition is that the displayed current image frame remains unchanged.

The processor 502 is further configured to: when displaying of the current image frame by the first device satisfies the static display condition, encode the current image frame again according to the second encoding quality.

The transmitter 504 is further configured to share, with the second device for displaying, the current image frame that has been encoded again by the processor 502.

Optionally, the processor 502 is specifically configured to:
obtain duration during which the first device displays the current image frame, and detect whether the duration is greater than a preset threshold; or
detect whether a pause instruction is received, where the pause instruction is used to instruct the first device to stop updating the image frame in the display buffer to a next image frame.

Optionally, the processor 502 is specifically configured to:
determine an application program generating the current image frame, and detect whether the application program belongs to a dynamic program list or a static program list, where the dynamic program list includes an application program providing the dynamic display scenario, and the static program list includes an application program providing the static display scenario; or
determine a control interface that is called when the current image frame is displayed, and detect whether the control interface belongs to a dynamic interface list or a static interface list, where the dynamic interface list includes a control interface that is called in the dynamic display scenario, and the static interface list includes a control interface that is called in the static display scenario; or
detect, by using an encoding interface called by an application program providing the current image frame, whether the current image frame is an image frame generated in the dynamic display scenario or in the static display scenario, where the encoding interface includes a first encoding interface and a second encoding interface, the first encoding interface is used to instruct to encode an image frame according to the first encoding quality, and the second encoding interface is used to instruct to encode an image frame according to the second encoding quality; or
obtain an image frame in the display buffer that is adjacent to the current image frame, detect whether image data respectively included in the current image frame and the adjacent image frame is the same, and when the image data is different, determine that the current image frame is an image frame generated in the dynamic display scenario, or when the image data is the same, determine that the current image frame is an image frame generated in the static display scenario; or
obtain an image frame in the display buffer that is adjacent to the current image frame, extract image features of a same type from the current image frame and the adjacent image frame, detect whether the respectively obtained image features are the same, and when the image features are different, determine that the current image frame is an image frame generated in the dynamic display scenario, or when the image features are the same, determine that the current image frame is an image frame generated in the static display scenario.

Optionally, the processor 502 is further configured to: before detecting whether the current image frame in the display buffer is an image frame generated in the dynamic display scenario or in the static display scenario, obtain a resolution of the second device; and if the resolution of the second device is higher than a resolution of the first device, perform super-resolution processing on the current image frame.

Optionally, the processor 502 is further configured to obtain quality of a network on which the current image frame that has been encoded is to be transmitted.

The processor 502 is further configured to: adjust, according to the quality of the network, an encoding parameter corresponding to the first encoding quality, or adjust, according to the quality of the network, an encoding parameter corresponding to the second encoding quality, where there is a positive correlation between the quality of the network and a data volume of the current image frame that has been encoded, and the current image frame that has been encoded is obtained by means of encoding according to the encoding parameter.

Optionally, the second encoding quality is corresponding to a lossless compression manner, and the transmitter 504 is specifically configured to:
create a lossless compression data channel, and share, by using the lossless compression data channel, the current image frame that has been encoded with the second device for displaying, where the lossless compression data channel and a lossy compression data channel are mutually independent from each other, and the lossy compression data channel is used to transmit an image frame that is obtained by means of encoding in a lossy compression manner; or
share, by using a lossy compression data channel corresponding to a lossy encoding protocol, the current image frame that has been encoded with the second device for displaying, where the lossy encoding protocol includes a newly added encoding protocol corresponding to the lossless compression manner, and the lossy compression data channel is used to transmit an image frame that is obtained by means of encoding by using the lossy encoding protocol.

To sum up, by means of the data processing apparatus provided in this example, it is detected whether a current image frame in a display buffer is an image frame generated in a dynamic display scenario or in a static display scenario; if the current image frame is an image frame generated in the dynamic display scenario, the current image frame is encoded according to first encoding quality, where the first encoding quality is used to indicate a first restoration degree to which an image frame that has been encoded is restored to the image frame that has not been encoded; and if the current image frame is an image frame generated in the static display scenario, the current image frame is encoded according to second encoding quality, where the second encoding quality is used to indicate a second restoration degree to which an image frame that has been encoded is restored to the image frame that has not been encoded, and the second restoration degree is higher than the first restoration degree. In this way, when the current image frame is an image frame generated in the dynamic display scenario, the current image frame may be encoded by using the first encoding quality. Because the first restoration degree indicated by the first encoding quality is lower than the second restoration degree indicated by the second encoding quality, a data volume of the current image frame that has been encoded is smaller, thereby resolving a problem that real-timeness of displaying by means of sharing is reduced when differences between image frames generated in the dynamic display scenario are relatively great and a restoration degree indicated by encoding quality is excessively high, and achieving an effect of improving the real-timeness of displaying by means of sharing.

In addition, when displaying of the current image frame by a first device satisfies the static display condition, the current image frame is encoded again according to the second encoding quality, and the current image frame that has been encoded again is shared with a second device for displaying. In this way, when a user is interested in the displayed current image frame, the current image frame may be encoded again by using the second encoding quality and shared again, to improve a display effect of the current image frame by the second device.

It should be noted that, when the data processing apparatus provided in the foregoing examples and embodiment performs data processing, division of the foregoing functional modules is merely used as an example for description. In an actual application, the foregoing functions may be allocated to different functional modules and implemented according to a requirement. That is, an inner structure of the data processing apparatus is divided into different functional modules to implement all or some of the functions described above. In addition, the data processing apparatus provided in the foregoing examples and embodiment shares a same concept with the examples and embodiment of the data processing method. For a specific implementation process, refer to the method examples and embodiment, and details are not described herein again.

The sequence numbers of the foregoing embodiments of the present invention are merely for illustrative purposes, and are not intended to indicate priorities of the embodiments.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions.

It may be clearly understood by a person skilled in the art that, for the purpose of convenient and brief description, for a detailed working process of the foregoing system, apparatus, and unit, refer to a corresponding process in the foregoing method examples and embodiment and details are not described herein again.

In the several embodiments provided in the present application, it should be understood that the disclosed system, apparatus, and method may be implemented in other manners. For example, the described apparatus embodiment is merely an example. For example, the unit division may merely be logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the method described in the embodiment of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, which is defined in the appended claims.

## Claims

1. A data processing method, wherein the method comprises:
detecting, by a first device, whether a current image frame in a display buffer is an image frame generated in a dynamic display scenario or in a static display scenario, wherein the dynamic display scenario is a display scenario in which an image frame dynamically changes in a preset time period, and the static display scenario is a display scenario in which an image frame remains unchanged in the preset time period;
if the current image frame is an image frame generated in the dynamic display scenario, encoding the current image frame according to first encoding quality, wherein the first encoding quality is used to indicate a first restoration degree to which an image frame that has been encoded is restored to the image frame that has not been encoded;
if the current image frame is an image frame generated in the static display scenario, encoding the current image frame according to second encoding quality, wherein the second encoding quality is used to indicate a second restoration degree to which an image frame that has been encoded is restored to the image frame that has not been encoded, and the second restoration degree is higher than the first restoration degree; and
sharing the current image frame that has been encoded with a second device for displaying;
wherein after the sharing the current image frame that has been encoded with a second device for displaying, the method further comprises:
if the current image frame that has been encoded is obtained by encoding the current image frame according to the first encoding quality, detecting whether displaying of the current image frame by the first device satisfies a static display condition, wherein the static display condition is that the displayed current image frame remains unchanged;
if displaying of the current image frame by the first device satisfies the static display condition, encoding the current image frame again according to the second encoding quality; and
sharing the current image frame that has been encoded again with the second device for displaying.

2. The method according to claim 1, wherein the detecting whether displaying of the current image frame by the first device satisfies a static display condition comprises:
obtaining duration during which the first device displays the current image frame, and detecting whether the duration is greater than a preset threshold; or
detecting whether a pause instruction is received, wherein the pause instruction is used to instruct the first device to stop updating the current image frame in the display buffer to a next image frame.

3. The method according to any one of claims 1 to 2, wherein the detecting, by a first device, whether a current image frame in a display buffer is an image frame generated in a dynamic display scenario or in a static display scenario comprises:
determining an application program generating the current image frame, and detecting whether the application program belongs to a dynamic program list or a static program list, wherein the dynamic program list comprises an application program providing the dynamic display scenario, and the static program list comprises an application program providing the static display scenario; or
determining a control interface that is called when the current image frame is displayed, and detecting whether the control interface belongs to a dynamic interface list or a static interface list, wherein the dynamic interface list comprises a control interface that is called in the dynamic display scenario, and the static interface list comprises a control interface that is called in the static display scenario; or
detecting, by using an encoding interface called by an application program providing the current image frame, whether the current image frame is an image frame generated in the dynamic display scenario or in the static display scenario, wherein the encoding interface comprises a first encoding interface and a second encoding interface, the first encoding interface is used to instruct to encode an image frame according to the first encoding quality, and the second encoding interface is used to instruct to encode an image frame according to the second encoding quality; or
obtaining an image frame in the display buffer that is adjacent to the current image frame, detecting whether image data respectively comprised in the current image frame and the adjacent image frame is the same, and when the image data is different, determining that the current image frame is an image frame generated in the dynamic display scenario, or when the image data is the same, determining that the current image frame is an image frame generated in the static display scenario; or
obtaining an image frame in the display buffer that is adjacent to the current image frame, extracting image features of a same type from the current image frame and the adjacent image frame, detecting whether the respectively obtained image features are the same, and when the image features are different, determining that the current image frame is an image frame generated in the dynamic display scenario, or when the image features are the same, determining that the current image frame is an image frame generated in the static display scenario.

4. The method according to any one of claims 1 to 3, wherein before the detecting, by a first device, whether a current image frame in a display buffer is an image frame generated in a dynamic display scenario or in a static display scenario, the method further comprises:
obtaining a resolution of the second device; and
if the resolution of the second device is higher than a resolution of the first device, performing super-resolution processing on the current image frame.

5. The method according to any one of claims 1 to 4, wherein the method further comprises:
obtaining quality of a network on which the current image frame that has been encoded is to be transmitted; and
adjusting, according to the quality of the network, an encoding parameter corresponding to the first encoding quality, or adjusting, according to the quality of the network, an encoding parameter corresponding to the second encoding quality, wherein there is a positive correlation between the quality of the network and a data volume of the current image frame that has been encoded, and the current image frame that has been encoded is obtained by means of encoding according to the encoding parameter.

6. The method according to claim 1, wherein the second encoding quality is corresponding to a lossless compression manner, and the sharing the current image frame that has been encoded with a second device for displaying comprises:
creating a lossless compression data channel, and sharing, by using the lossless compression data channel, the current image frame that has been encoded with the second device for displaying, wherein the lossless compression data channel and a lossy compression data channel are mutually independent from each other, and the lossy compression data channel is used to transmit an image frame that is obtained by means of encoding in a lossy compression manner; or
sharing, by using a lossy compression data channel corresponding to a lossy encoding protocol, the current image frame that has been encoded with the second device for displaying, wherein the lossy encoding protocol comprises a newly added encoding protocol corresponding to the lossless compression manner, and the lossy compression data channel is used to transmit an image frame that is obtained by means of encoding by using the lossy encoding protocol.

7. A data processing apparatus, wherein the apparatus comprises:
an image frame detection module, used for a first device and configured to detect whether a current image frame in a display buffer is an image frame generated in a dynamic display scenario or in a static display scenario, wherein the dynamic display scenario is a display scenario in which an image frame dynamically changes in a preset time period, and the static display scenario is a display scenario in which an image frame remains unchanged in the preset time period;
a first encoding module, configured to: when the image frame detection module detects that the current image frame is an image frame generated in the dynamic display scenario, encode the current image frame according to first encoding quality, wherein the first encoding quality is used to indicate a first restoration degree to which an image frame that has been encoded is restored to the image frame that has not been encoded;
a second encoding module, configured to: when the image frame detection module detects that the current image frame is an image frame generated in the static display scenario, encode the current image frame according to second encoding quality, wherein the second encoding quality is used to indicate a second restoration degree to which an image frame that has been encoded is restored to the image frame that has not been encoded, and the second restoration degree is higher than the first restoration degree; and
a first sharing module, configured to share, with a second device for displaying, the current image frame that has been encoded by the first encoding module or the second encoding module;
wherein the apparatus further comprises:
a display detection module, configured to: after the first sharing module shares the current image frame that has been encoded with the second device for displaying, if the current image frame that has been encoded is obtained by encoding the current image frame according to the first encoding quality, detect whether displaying of the current image frame by the first device satisfies a static display condition, wherein the static display condition is that the displayed current image frame remains unchanged;
a third encoding module, configured to: when the display detection module detects that displaying of the current image frame by the first device satisfies the static display condition, encode the current image frame again according to the second encoding quality; and
a second sharing module, configured to share, with the second device for displaying, the current image frame that has been encoded again by the third encoding module.

8. The apparatus according to claim 7, wherein the display detection module is specifically configured to:
obtain duration during which the first device displays the current image frame, and detect whether the duration is greater than a preset threshold; or
detect whether a pause instruction is received, wherein the pause instruction is used to instruct the first device to stop updating the current image frame in the display buffer to a next image frame.

9. The apparatus according to any one of claims 7 to 8, wherein the image frame detection module is specifically configured to:
determine an application program generating the current image frame, and detect whether the application program belongs to a dynamic program list or a static program list, wherein the dynamic program list comprises an application program providing the dynamic display scenario, and the static program list comprises an application program providing the static display scenario; or
determine a control interface that is called when the current image frame is displayed, and detect whether the control interface belongs to a dynamic interface list or a static interface list, wherein the dynamic interface list comprises a control interface that is called in the dynamic display scenario, and the static interface list comprises a control interface that is called in the static display scenario; or
detect, by using an encoding interface called by an application program providing the current image frame, whether the current image frame is an image frame generated in the dynamic display scenario or in the static display scenario, wherein the encoding interface comprises a first encoding interface and a second encoding interface, the first encoding interface is used to instruct to encode an image frame according to the first encoding quality, and the second encoding interface is used to instruct to encode an image frame according to the second encoding quality; or
obtain an image frame in the display buffer that is adjacent to the current image frame, detect whether image data respectively comprised in the current image frame and the adjacent image frame is the same, and when the image data is different, determine that the current image frame is an image frame generated in the dynamic display scenario, or when the image data is the same, determine that the current image frame is an image frame generated in the static display scenario; or
obtain an image frame in the display buffer that is adjacent to the current image frame, extract image features of a same type from the current image frame and the adjacent image frame, detect whether the respectively obtained image features are the same, and when the image features are different, determine that the current image frame is an image frame generated in the dynamic display scenario, or when the image features are the same, determine that the current image frame is an image frame generated in the static display scenario.

10. The apparatus according to any one of claims 7 to 9, wherein the apparatus further comprises:
an image frame processing module, configured to: before the image frame detection module detects whether the current image frame in the display buffer is an image frame generated in the dynamic display scenario or in the static display scenario, obtain a resolution of the second device; and if the resolution of the second device is higher than a resolution of the first device, perform super-resolution processing on the current image frame.

11. The apparatus according to any one of claims 7 to 10, wherein the apparatus further comprises:
a network quality obtaining module, configured to obtain quality of a network on which the current image frame that has been encoded is to be transmitted; and
a parameter adjustment module, configured to: adjust, according to the quality of the network obtained by the network quality obtaining module, an encoding parameter corresponding to the first encoding quality, or adjust, according to the quality of the network, an encoding parameter corresponding to the second encoding quality, wherein there is a positive correlation between the quality of the network and a data volume of the current image frame that has been encoded, and the current image frame that has been encoded is obtained by means of encoding according to the encoding parameter.

12. The apparatus according to claim 7, wherein the second encoding quality is corresponding to a lossless compression manner, and the first sharing module is specifically configured to:
create a lossless compression data channel, and share, by using the lossless compression data channel, the current image frame that has been encoded with the second device for displaying, wherein the lossless compression data channel and a lossy compression data channel are mutually independent from each other, and the lossy compression data channel is used to transmit an image frame that is obtained by means of encoding in a lossy compression manner; or
share, by using a lossy compression data channel corresponding to a lossy encoding protocol, the current image frame that has been encoded with the second device for displaying, wherein the lossy encoding protocol comprises a newly added encoding protocol corresponding to the lossless compression manner, and the lossy compression data channel is used to transmit an image frame that is obtained by means of encoding by using the lossy encoding protocol.

13. A computer readable storage medium, having instructions thereon, which when the instructions are executed by a computer, cause the computer to carry out the method according to any one of claims 1 to 6.

## Patentansprüche

1. Datenverarbeitungsverfahren, wobei das Verfahren Folgendes umfasst:
Detektieren, durch eine erste Vorrichtung, ob ein aktueller Bildframe in einem Anzeigepuffer ein in einem dynamischen Anzeigeszenarium oder in einem statischen Anzeigeszenarium erzeugter Bildframe ist, wobei das dynamische Anzeigeszenarium ein Anzeigeszenarium ist, in dem sich ein Bildframe in einem voreingestellten Zeitraum dynamisch ändert, und das statische Anzeigeszenarium ein Anzeigeszenarium ist, in dem ein Bildframe in dem voreingestellten Zeitraum unverändert bleibt;
falls der aktuelle Bildframe ein in dem dynamischen Anzeigeszenarium erzeugter Bildframe ist, Codieren des aktuellen Bildframes gemäß einer ersten Codierqualität, wobei die erste Codierqualität zum Angeben eines ersten Restaurierungsgrads verwendet wird, auf den ein Bildframe, der codiert wurde, zu dem Bildframe, der nicht codiert wurde, restauriert wird;
falls der aktuelle Bildframe ein in einem statischen Anzeigeszenarium erzeugter Bildframe ist, Codieren des aktuellen Bildframes gemäß einer zweiten Codierqualität, wobei die zweite Codierqualität zum Angeben eines zweiten Restaurierungsgrads verwendet wird, auf den ein Bildframe, der codiert wurde, zu dem Bildframe, der nicht codiert wurde, restauriert wird, und wobei der zweite Restaurierungsgrad höher als der erste Restaurierungsgrad ist; und
Gemeinsamnutzen des aktuellen Bildframes, der codiert wurde, mit einer zweiten Vorrichtung zum Anzeigen;
wobei das Verfahren, nach dem Gemeinsamnutzen des aktuellen Bildframes, der codiert wurde, mit einer zweiten Vorrichtung zum Anzeigen, ferner Folgendes umfasst:
falls der aktuelle Bildframe, der codiert wurde, durch Codieren des aktuellen Bildframes gemäß der ersten Codierqualität erhalten wird, Detektieren, ob Anzeigen des aktuellen Bildframes durch die erste Vorrichtung eine statische Anzeigebedingung erfüllt, wobei die statische Anzeigebedingung derart ist, dass der angezeigte aktuelle Bildframe unverändert bleibt;
falls Anzeigen des aktuellen Bildframes durch die erste Vorrichtung die statische Anzeigebedingung erfüllt, nochmaliges Codieren des aktuellen Bildframes gemäß der zweiten Codierqualität; und
Gemeinsamnutzen des aktuellen Bildframes, der nochmals codiert wurde, mit der zweiten Vorrichtung zum Anzeigen.

2. Verfahren nach Anspruch 1, wobei das Detektieren, ob Anzeigen des aktuellen Bildframes durch die erste Vorrichtung eine statische Anzeigebedingung erfüllt, Folgendes umfasst:
Erhalten einer Dauer, während der die erste Vorrichtung den aktuellen Bildframe anzeigt, und Detektieren, ob die Dauer größer als eine voreingestellte Schwelle ist; oder
Detektieren, ob eine Pause-Anweisung empfangen wird, wobei die Pause-Anweisung dafür verwendet wird, die Vorrichtung anzuweisen, Aktualisieren des aktuellen Bildframes in dem Anzeigepuffer auf einen nächsten Bildframe zu stoppen.

3. Verfahren nach einem der Ansprüche 1 bis 2, wobei das Detektieren, durch eine erste Vorrichtung, ob ein aktueller Bildframe in einem Anzeigepuffer ein in einem dynamischen Anzeigeszenarium oder in einem statischen Anzeigeszenarium erzeugter Bildframe ist, Folgendes umfasst:
Bestimmen eines Anwendungsprogramms, das den aktuellen Bildframe erzeugt, und Detektieren, ob das Anwendungsprogramm einer Dynamisches-Programm-Liste oder einer Statisches-Programm-Liste angehört, wobei die Dynamisches-Programm-Liste ein Anwendungsprogramm umfasst, das das dynamische Anzeigeszenarium bereitstellt, und die Statisches-Programm-Liste ein Anwendungsprogramm umfasst, das das statische Anzeigeszenarium bereitstellt; oder
Bestimmen einer Steuerschnittstelle, die aufgerufen wird, wenn der aktuelle Bildframe angezeigt wird, und Detektieren, ob die Steuerschnittstelle einer Dynamische-Schnittstelle-Liste oder einer Statische-Schnittstelle-Liste angehört, wobei die Dynamische-Schnittstelle-Liste eine Steuerschnittstelle umfasst, die in dem dynamischen Anzeigeszenarium aufgerufen wird, und die Statische-Schnittstelle-Liste eine Steuerschnittstelle umfasst, die in dem statischen Anzeigeszenarium aufgerufen wird; oder
Detektieren, unter Verwendung einer durch ein Anwendungsprogramm, das den aktuellen Bildframe liefert, aufgerufenen Codierschnittstelle, ob der aktuelle Bildframe ein in dem dynamischen Anzeigeszenarium oder in dem statischen Anzeigeszenarium erzeugter Bildframe ist, wobei die Codierschnittstelle eine erste Codierschnittstelle und eine zweite Codierschnittstelle umfasst, wobei die erste Codierschnittstelle dafür verwendet wird, anzuweisen, einen Bildframe gemäß der ersten Codierqualität zu codieren, und die zweite Codierschnittstelle dafür verwendet wird, anzuweisen, einen Bildframe gemäß der zweiten Codierqualität zu codieren; oder
Erhalten eines Bildframes in dem Anzeigepuffer, der an den aktuellen Bildframe angrenzt, Detektieren, ob jeweils in dem aktuellen Bildframe und dem angrenzenden Bildframe enthaltene Bilddaten dieselben sind, und, wenn sich die Bilddaten unterscheiden, Bestimmen, dass der aktuelle Bildframe ein in dem dynamischen Anzeigeszenarium erzeugter Bildframe ist, oder, wenn die Bilddaten dieselben sind, Bestimmen, dass der aktuelle Bildframe ein in dem statischen Anzeigeszenarium erzeugter Bildframe ist; oder
Erhalten eines Bildframes in dem Anzeigepuffer, der an den aktuellen Bildframe angrenzt, Extrahieren von Bildmerkmalen einer selben Art aus dem aktuellen Bildframe und dem angrenzenden Bildframe, Detektieren, ob die jeweils erhaltenen Bildmerkmale dieselben sind, und, wenn sich die Bildmerkmale unterscheiden, Bestimmen, dass der aktuelle Bildframe ein in dem dynamischen Anzeigeszenarium erzeugter Bildframe ist, oder, wenn die Bildmerkmale dieselben sind, Bestimmen, dass der aktuelle Bildframe ein in dem statischen Anzeigeszenarium erzeugter Bildframe ist.

4. Verfahren nach einem der Ansprüche 1 bis 3, wobei das Verfahren, vor dem Detektieren, durch eine erste Vorrichtung, ob ein aktueller Bildframe in einem Anzeigepuffer ein in einem dynamischen Anzeigeszenarium oder in einem statischen Anzeigeszenarium erzeugter Bildframe ist, ferner Folgendes umfasst:
Erhalten einer Auflösung der zweiten Vorrichtung; und
falls die Auflösung der zweiten Vorrichtung höher als eine Auflösung der ersten Vorrichtung ist, Durchführen von Superauflösungsverarbeitung an dem aktuellen Bildframe.

5. Verfahren nach einem der Ansprüche 1 bis 4, wobei das Verfahren ferner Folgendes umfasst:
Erhalten einer Qualität eines Netzwerks, auf dem der aktuelle Bildframe, der codiert wurde, übertragen werden soll; und
Anpassen, gemäß der Qualität des Netzwerks, eines Codierparameters, der der ersten Codierqualität entspricht, oder Anpassen, gemäß der Qualität des Netzwerks, eines Codierparameters, der der zweiten Codierqualität entspricht, wobei es eine positive Korrelation zwischen der Qualität des Netzwerks und einem Datenvolumen des aktuellen Bildframes, der codiert wurde, gibt, und der aktuelle Bildframe, der codiert wurde, mittels Codieren gemäß dem Codierparameter erhalten wird.

6. Verfahren nach Anspruch 1, wobei die zweite Codierqualität einer verlustlosen Komprimierweise entspricht, und das Gemeinsamnutzen des aktuellen Bildframes, der codiert wurde, mit einer zweiten Vorrichtung zum Anzeigen Folgendes umfasst:
Schaffen eines Verlustlos-Komprimierung-Datenkanals und Gemeinsamnutzen, unter Verwendung des Verlustlos-Komprimierung-Datenkanals, des aktuellen Bildframes, der codiert wurde, mit der zweiten Vorrichtung zum Anzeigen, wobei der Verlustlos-Komprimierung-Datenkanal und ein Verlustbehaftete-Komprimierung-Datenkanal gegenseitig voneinander unabhängig sind, und der Verlustbehaftete-Komprimierung-Datenkanal zum Übertragen eines Bildframes, der mittels Codieren auf eine verlustbehaftete Komprimierungsweise erhalten wird, verwendet wird; oder
Gemeinsamnutzen, unter Verwendung eines Verlustbehaftete-Komprimierung-Datenkanals, der einem verlustbehafteten Codierprotokoll entspricht, des aktuellen Bildframes, der codiert wurde, mit der zweiten Vorrichtung zum Anzeigen, wobei das verlustbehaftete Codierprotokoll ein neu hinzugefügtes Codierprotokoll umfasst, das der verlustlosen Komprimierungsweise entspricht, und der Verlustbehaftete-Komprimierung-Datenkanal zum Übertragen eines Bildframes, der mittels Codieren unter Verwendung des verlustbehafteten Codierprotokolls erhalten wird, verwendet wird.

7. Datenverarbeitungseinrichtung, wobei die Einrichtung Folgendes umfasst:
ein Bildframedetektionsmodul, verwendet für eine erste Vorrichtung und ausgelegt zum Detektieren, ob ein aktueller Bildframe in einem Anzeigepuffer ein in einem dynamischen Anzeigeszenarium oder in einem statischen Anzeigeszenarium erzeugter Bildframe ist, wobei das dynamische Anzeigeszenarium ein Anzeigeszenarium ist, in dem sich ein Bildframe in einem voreingestellten Zeitraum dynamisch ändert, und das statische Anzeigeszenarium ein Anzeigeszenarium ist, in dem ein Bildframe in dem voreingestellten Zeitraum unverändert bleibt;
ein erstes Codiermodul, ausgelegt zum: wenn das Bildframedetektionsmodul detektiert, dass der aktuelle Bildframe ein in dem dynamischen Anzeigeszenarium erzeugter Bildframe ist, Codieren des aktuellen Bildframes gemäß einer ersten Codierqualität, wobei die erste Codierqualität zum Angeben eines ersten Restaurierungsgrads verwendet wird, auf den ein Bildframe, der codiert wurde, zu dem Bildframe, der nicht codiert wurde, restauriert wird;
ein zweites Codiermodul, ausgelegt zum: wenn das Bildframedetektionsmodul detektiert, dass der aktuelle Bildframe ein in dem statischen Anzeigeszenarium erzeugter Bildframe ist, Codieren des aktuellen Bildframes gemäß einer zweiten Codierqualität, wobei die zweite Codierqualität zum Angeben eines zweiten Restaurierungsgrads verwendet wird, auf den ein Bildframe, der codiert wurde, zu dem Bildframe, der nicht codiert wurde, restauriert wird, und wobei der zweite Restaurierungsgrad höher als der erste Restaurierungsgrad ist; und
ein erstes Gemeinsamnutzmodul, ausgelegt zum Gemeinsamnutzen, mit einer zweiten Vorrichtung zum Anzeigen, des aktuellen Bildframes, der durch das erste Codiermodul oder das zweite Codiermodul codiert wurde;
wobei die Einrichtung ferner Folgendes umfasst:
ein Anzeigedetektionsmodul, ausgelegt zum: nachdem das erste Gemeinsamnutzmodul den aktuellen Bildframe, der codiert wurde, mit der zweiten Vorrichtung zum Anzeigen gemeinsam genutzt hat, falls der aktuelle Bildframe, der codiert wurde, durch Codieren des aktuellen Bildframes gemäß der ersten Codierqualität erhalten wird, Detektieren, ob Anzeigen des aktuellen Bildframes durch die erste Vorrichtung eine statische Anzeigebedingung erfüllt, wobei die statische Anzeigebedingung derart ist, dass der angezeigte aktuelle Bildframe unverändert bleibt;
ein drittes Codiermodul, ausgelegt zum: wenn das Anzeigedetektionsmodul detektiert, dass Anzeigen des aktuellen Bildframes durch die erste Vorrichtung die statische Anzeigebedingung erfüllt, nochmaliges Codieren des aktuellen Bildframes gemäß der zweiten Codierqualität; und
ein zweites Gemeinsamnutzmodul, ausgelegt zum Gemeinsamnutzen, mit der zweiten Vorrichtung zum Anzeigen, des aktuellen Bildframes, der durch das dritte Codiermodul nochmals codiert wurde.

8. Einrichtung nach Anspruch 7, wobei das Anzeigedetektionsmodul insbesondere ausgelegt ist zum:
Erhalten einer Dauer, während der die erste Vorrichtung den aktuellen Bildframe anzeigt, und Detektieren, ob die Dauer größer als eine voreingestellte Schwelle ist; oder
Detektieren, ob eine Pause-Anweisung empfangen wird, wobei die Pause-Anweisung dafür verwendet wird, die Vorrichtung anzuweisen, Aktualisieren des aktuellen Bildframes in dem Anzeigepuffer auf einen nächsten Bildframe zu stoppen.

9. Einrichtung nach einem der Ansprüche 7 bis 8, wobei das Bildframedetektionsmodul insbesondere ausgelegt ist zum:
Bestimmen eines Anwendungsprogramms, das den aktuellen Bildframe erzeugt, und Detektieren, ob das Anwendungsprogramm einer Dynamisches-Programm-Liste oder einer Statisches-Programm-Liste angehört, wobei die Dynamisches-Programm-Liste ein Anwendungsprogramm umfasst, das das dynamische Anzeigeszenarium bereitstellt, und die Statisches-Programm-Liste ein Anwendungsprogramm umfasst, das das statische Anzeigeszenarium bereitstellt; oder
Bestimmen einer Steuerschnittstelle, die aufgerufen wird, wenn der aktuelle Bildframe angezeigt wird, und Detektieren, ob die Steuerschnittstelle einer Dynamische-Schnittstelle-Liste oder einer Statische-Schnittstelle-Liste angehört, wobei die Dynamische-Schnittstelle-Liste eine Steuerschnittstelle umfasst, die in dem dynamischen Anzeigeszenarium aufgerufen wird, und die Statische-Schnittstelle-Liste eine Steuerschnittstelle umfasst, die in dem statischen Anzeigeszenarium aufgerufen wird; oder
Detektieren, unter Verwendung einer durch ein Anwendungsprogramm, das den aktuellen Bildframe liefert, aufgerufenen Codierschnittstelle, ob der aktuelle Bildframe ein in dem dynamischen Anzeigeszenarium oder in dem statischen Anzeigeszenarium erzeugter Bildframe ist, wobei die Codierschnittstelle eine erste Codierschnittstelle und eine zweite Codierschnittstelle umfasst, wobei die erste Codierschnittstelle dafür verwendet wird, anzuweisen, einen Bildframe gemäß der ersten Codierqualität zu codieren, und die zweite Codierschnittstelle dafür verwendet wird, anzuweisen, einen Bildframe gemäß der zweiten Codierqualität zu codieren; oder
Erhalten eines Bildframes in dem Anzeigepuffer, der an den aktuellen Bildframe angrenzt, Detektieren, ob jeweils in dem aktuellen Bildframe und dem angrenzenden Bildframe enthaltene Bilddaten dieselben sind, und, wenn sich die Bilddaten unterscheiden, Bestimmen, dass der aktuelle Bildframe ein in dem dynamischen Anzeigeszenarium erzeugter Bildframe ist, oder, wenn die Bilddaten dieselben sind, Bestimmen, dass der aktuelle Bildframe ein in dem statischen Anzeigeszenarium erzeugter Bildframe ist; oder
Erhalten eines Bildframes in dem Anzeigepuffer, der an den aktuellen Bildframe angrenzt, Extrahieren von Bildmerkmalen einer selben Art aus dem aktuellen Bildframe und dem angrenzenden Bildframe, Detektieren, ob die jeweils erhaltenen Bildmerkmale dieselben sind, und, wenn sich die Bildmerkmale unterscheiden, Bestimmen, dass der aktuelle Bildframe ein in dem dynamischen Anzeigeszenarium erzeugter Bildframe ist, oder, wenn die Bildmerkmale dieselben sind, Bestimmen, dass der aktuelle Bildframe ein in dem statischen Anzeigeszenarium erzeugter Bildframe ist.

10. Einrichtung nach einem der Ansprüche 7 bis 9, wobei die Einrichtung ferner Folgendes umfasst:
ein Bildframeverarbeitungsmodul, ausgelegt zum: bevor das Bildframedetektionsmodul detektiert, ob der aktuelle Bildframe in dem Anzeigepuffer ein in dem dynamischen Anzeigeszenarium oder in dem statischen Anzeigeszenarium erzeugter Bildframe ist,
Erhalten einer Auflösung der zweiten Vorrichtung; und, falls die Auflösung der zweiten Vorrichtung höher als eine Auflösung der ersten Vorrichtung ist, Durchführen von Superauflösungsverarbeitung an dem aktuellen Bildframe.

11. Einrichtung nach einem der Ansprüche 7 bis 10, wobei die Einrichtung ferner Folgendes umfasst:
ein Netzwerkqualitäterhaltemodul, ausgelegt zum Erhalten einer Qualität eines Netzwerks, auf dem der aktuelle Bildframe, der codiert wurde, übertragen werden soll; und
ein Parameteranpassmodul, ausgelegt zum: Anpassen, gemäß der durch das Netzwerkqualitäterhaltemodul erhaltenen Qualität des Netzwerks, eines Codierparameters, der der ersten Codierqualität entspricht, oder Anpassen, gemäß der Qualität des Netzwerks, eines Codierparameters, der der zweiten Codierqualität entspricht, wobei es eine positive Korrelation zwischen der Qualität des Netzwerks und einem Datenvolumen des aktuellen Bildframes, der codiert wurde, gibt, und der aktuelle Bildframe, der codiert wurde, mittels Codieren gemäß dem Codierparameter erhalten wird.

12. Einrichtung nach Anspruch 7, wobei die zweite Codierqualität einer verlustlosen Komprimierweise entspricht, und das erste Gemeinsamnutzmodul insbesondere ausgelegt ist zum:
Schaffen eines Verlustlos-Komprimierung-Datenkanals und Gemeinsamnutzen, unter Verwendung des Verlustlos-Komprimierung-Datenkanals, des aktuellen Bildframes, der codiert wurde, mit der zweiten Vorrichtung zum Anzeigen, wobei der Verlustlos-Komprimierung-Datenkanal und ein Verlustbehaftete-Komprimierung-Datenkanal gegenseitig voneinander unabhängig sind, und der Verlustbehaftete-Komprimierung-Datenkanal zum Übertragen eines Bildframes, der mittels Codieren auf eine verlustbehaftete Komprimierungsweise erhalten wird, verwendet wird; oder
Gemeinsamnutzen, unter Verwendung eines Verlustbehaftete-Komprimierung-Datenkanals, der einem verlustbehafteten Codierprotokoll entspricht, des aktuellen Bildframes, der codiert wurde, mit der zweiten Vorrichtung zum Anzeigen, wobei das verlustbehaftete Codierprotokoll ein neu hinzugefügtes Codierprotokoll umfasst, das der verlustlosen Komprimierungsweise entspricht, und der Verlustbehaftete-Komprimierung-Datenkanal zum Übertragen eines Bildframes, der mittels Codieren unter Verwendung des verlustbehafteten Codierprotokolls erhalten wird, verwendet wird.

13. Computerlesbares Speicherungsmedium, das darauf Anweisungen aufweist, die, wenn die Anweisungen durch einen Computer ausgeführt werden, den Computer zum Ausführen des Verfahrens nach einem der Ansprüche 1 bis 6 veranlassen.

## Revendications

1. Procédé de traitement de données, le procédé comprenant les étapes consistant à :
détecter, par un premier dispositif, si une trame d'image actuelle dans un tampon d'affichage est une trame d'image générée dans un scénario d'affichage dynamique ou dans un scénario d'affichage statique, le scénario d'affichage dynamique étant un scénario d'affichage où une trame d'image change de façon dynamique pendant une période de temps prédéfinie et le scénario d'affichage statique étant un scénario d'affichage où une trame d'image reste inchangée pendant la période de temps prédéfinie ;
si la trame d'image actuelle est une trame d'image générée dans le scénario d'affichage dynamique, coder la trame d'image actuelle selon une première qualité de codage, la première qualité de codage étant utilisée pour indiquer un premier degré de restauration auquel une trame d'image qui a été codée est restaurée à la trame d'image qui n'a pas été codée ;
si la trame d'image actuelle est une trame d'image générée dans le scénario d'affichage statique, coder la trame d'image actuelle selon une seconde qualité de codage, la seconde qualité de codage étant utilisée pour indiquer un second degré de restauration auquel une trame d'image qui a été codée est restaurée à la trame d'image qui n'a pas été codée, et le second degré de restauration étant supérieur au premier degré de restauration ; et
partager avec un second dispositif d'affichage la trame d'image actuelle qui a été codée ;
le procédé comprenant en outre, après le partage, avec un second dispositif d'affichage, de la trame d'image actuelle qui a été codée, les étapes consistant à :
si la trame d'image actuelle qui a été codée est obtenue en codant la trame d'image actuelle selon la première qualité de codage, détecter si l'affichage de la trame d'image actuelle par le premier dispositif satisfait à une condition d'affichage statique, la condition d'affichage statique étant que la trame d'image actuelle affichée reste inchangée ;
si l'affichage de la trame d'image actuelle par le premier dispositif satisfait à la condition d'affichage statique, coder à nouveau la trame d'image actuelle selon la seconde qualité de codage ; et
partager avec le second dispositif d'affichage la trame d'image actuelle qui a été codée à nouveau.

2. Procédé selon la revendication 1, dans lequel le fait de détecter si l'affichage de la trame d'image actuelle par le premier dispositif satisfait à une condition d'affichage statique comprend l'étape consistant à :
obtenir une durée pendant laquelle le premier dispositif affiche la trame d'image actuelle et détecter si la durée est supérieure à un seuil prédéfini ; ou
détecter si une instruction de pause est reçue, l'instruction de pause étant utilisée pour donner l'instruction au premier dispositif d'arrêter de mettre à jour la trame d'image actuelle dans le tampon d'affichage vers une trame d'image suivante.

3. Procédé selon l'une quelconque des revendications 1 et 2, dans lequel le fait de détecter, par un premier dispositif, si une trame d'image actuelle dans un tampon d'affichage est une trame d'image générée dans un scénario d'affichage dynamique ou dans un scénario d'affichage statique comprend l'étape consistant à :
déterminer un programme d'application qui génère la trame d'image actuelle et détecter si le programme d'application appartient à une liste de programmes dynamiques ou à une liste de programmes statiques, la liste de programmes dynamiques comprenant un programme d'application qui fournit le scénario d'affichage dynamique et la liste de programmes statiques comprenant un programme d'application qui fournit le scénario d'affichage statique ; ou
déterminer une interface de contrôle qui est appelée quand la trame d'image actuelle est affichée et détecter si l'interface de contrôle appartient à une liste d'interfaces dynamiques ou à une liste d'interfaces statiques, la liste d'interfaces dynamiques comprenant une interface de contrôle qui est appelée dans le scénario d'affichage dynamique et la liste d'interfaces statiques comprenant une interface de contrôle qui est appelée dans le scénario d'affichage statique ; ou
détecter, au moyen d'une interface de codage appelée par un programme d'application qui fournit la trame d'image actuelle, si la trame d'image actuelle est une trame d'image générée dans le scénario d'affichage dynamique ou dans le scénario d'affichage statique, l'interface de codage comprenant une première interface de codage et une seconde interface de codage, la première interface de codage étant utilisée pour donner l'instruction de coder une trame d'image selon la première qualité de codage et la seconde interface de codage étant utilisée pour donner l'instruction de coder une trame d'image selon la seconde qualité de codage ; ou
obtenir dans le tampon d'affichage une trame d'image qui est adjacente à la trame d'image actuelle, détecter si des données d'image comprises respectivement dans la trame d'image actuelle et la trame d'image adjacente sont les mêmes et, quand les données d'image sont différentes, déterminer que la trame d'image actuelle est une trame d'image générée dans le scénario d'affichage dynamique ou, quand les données d'image sont les mêmes, déterminer que la trame d'image actuelle est une trame d'image générée dans le scénario d'affichage statique ; ou
obtenir dans le tampon d'affichage une trame d'image qui est adjacente à la trame d'image actuelle, extraire de la trame d'image actuelle et de la trame d'image adjacente des attributs d'image d'un même type, détecter si les attributs d'image obtenus respectivement sont les mêmes et, quand les attributs d'image sont différents, déterminer que la trame d'image actuelle est une trame d'image générée dans le scénario d'affichage dynamique ou, quand les attributs d'image sont les mêmes, déterminer que la trame d'image actuelle est une trame d'image générée dans le scénario d'affichage statique.

4. Procédé selon l'une quelconque des revendications 1 à 3, le procédé comprenant en outre, avant la détection, par un premier dispositif, si une trame d'image actuelle dans un tampon d'affichage est une trame d'image générée dans un scénario d'affichage dynamique ou dans un scénario d'affichage statique, les étapes consistant à :
obtenir une résolution du second dispositif ; et
si la résolution du second dispositif est supérieure à une résolution du premier dispositif, réaliser un traitement de super-résolution sur la trame d'image actuelle.

5. Procédé selon l'une quelconque des revendications 1 à 4, le procédé comprenant en outre les étapes consistant à :
obtenir une qualité d'un réseau sur lequel doit être transmise la trame d'image actuelle qui a été codée ; et
régler, selon la qualité du réseau, un paramètre de codage qui correspond à la première qualité de codage ou régler, selon la qualité du réseau, un paramètre de codage qui correspond à la seconde qualité de codage, une corrélation positive existant entre la qualité du réseau et un volume de données de la trame d'image actuelle qui a été codée, et la trame d'image actuelle qui a été codée étant obtenue à l'aide d'un codage selon le paramètre de codage.

6. Procédé selon la revendication 1, dans lequel la seconde qualité de codage correspond à un mode de compression sans pertes et le partage, avec un second dispositif d'affichage, de la trame d'image actuelle qui a été codée, comprend l'étape consistant à :
créer un canal de données de compression sans pertes et partager, avec le second dispositif d'affichage, au moyen du canal de données de compression sans pertes, la trame d'image actuelle qui a été codée, le canal de données de compression sans pertes et un canal de données de compression avec pertes étant mutuellement indépendants l'un de l'autre, et le canal de données de compression avec pertes étant utilisé pour transmettre une trame d'image qui est obtenue à l'aide d'un codage dans un mode de compression avec pertes ; ou
partager avec le second dispositif d'affichage, au moyen d'un canal de données de compression avec pertes qui correspond à un protocole de codage avec pertes, la trame d'image actuelle qui a été codée, le protocole de codage avec pertes comprenant un protocole de codage récemment ajouté qui correspond au mode de compression sans pertes, et le canal de données de compression avec pertes étant utilisé pour transmettre une trame d'image qui est obtenue à l'aide d'un codage au moyen du protocole de codage avec pertes.

7. Appareil de traitement de données, l'appareil comprenant :
un module de détection de trame d'image, utilisé pour un premier dispositif et configuré pour détecter si une trame d'image actuelle dans un tampon d'affichage est une trame d'image générée dans un scénario d'affichage dynamique ou dans un scénario d'affichage statique, le scénario d'affichage dynamique étant un scénario d'affichage où une trame d'image change de façon dynamique pendant une période de temps prédéfinie et le scénario d'affichage statique étant un scénario d'affichage où une trame d'image reste inchangée pendant la période de temps prédéfinie ;
un premier module de codage, configuré pour : quand le module de détection de trame d'image détecte que la trame d'image actuelle est une trame d'image générée dans le scénario d'affichage dynamique, coder la trame d'image actuelle selon une première qualité de codage, la première qualité de codage étant utilisée pour indiquer un premier degré de restauration auquel une trame d'image qui a été codée est restaurée à la trame d'image qui n'a pas été codée ;
un deuxième module de codage, configuré pour : quand le module de détection de trame d'image détecte que la trame d'image actuelle est une trame d'image générée dans le scénario d'affichage statique, coder la trame d'image actuelle selon une seconde qualité de codage, la seconde qualité de codage étant utilisée pour indiquer un second degré de restauration auquel une trame d'image qui a été codée est restaurée à la trame d'image qui n'a pas été codée, et le second degré de restauration étant supérieur au premier degré de restauration ; et
un premier module de partage, configuré pour partager avec un second dispositif d'affichage, la trame d'image actuelle qui a été codée par le premier module de codage ou le deuxième module de codage ;
l'appareil comprenant en outre :
un module de détection d'affichage, configuré pour : après le partage, par le premier module de partage avec le second dispositif d'affichage, de la trame d'image actuelle qui a été codée, si la trame d'image actuelle qui a été codée est obtenue en codant la trame d'image actuelle selon la première qualité de codage, détecter si l'affichage de la trame d'image actuelle par le premier dispositif satisfait à une condition d'affichage statique, la condition d'affichage statique étant que la trame d'image actuelle affichée reste inchangée ;
un troisième module de codage, configuré pour : quand le module de détection d'affichage détecte que l'affichage de la trame d'image actuelle par le premier dispositif satisfait à la condition d'affichage statique, coder à nouveau la trame d'image actuelle selon la seconde qualité de codage ; et
un second module de partage, configuré pour partager avec le second dispositif d'affichage, la trame d'image actuelle qui a été codée à nouveau par le troisième module de codage.

8. Appareil selon la revendication 7, dans lequel le module de détection d'affichage est spécifiquement configuré pour :
obtenir une durée pendant laquelle le premier dispositif affiche la trame d'image actuelle et détecter si la durée est supérieure à un seuil prédéfini ; ou
détecter si une instruction de pause est reçue, l'instruction de pause étant utilisée pour donner l'instruction au premier dispositif d'arrêter de mettre à jour la trame d'image actuelle dans le tampon d'affichage vers une trame d'image suivante.

9. Appareil selon l'une quelconque des revendications 7 et 8, dans lequel le module de détection de trame d'image est spécifiquement configuré pour :
déterminer un programme d'application qui génère la trame d'image actuelle et détecter si le programme d'application appartient à une liste de programmes dynamiques ou à une liste de programmes statiques, la liste de programmes dynamiques comprenant un programme d'application qui fournit le scénario d'affichage dynamique et la liste de programmes statiques comprenant un programme d'application qui fournit le scénario d'affichage statique ; ou
déterminer une interface de contrôle qui est appelée quand la trame d'image actuelle est affichée et détecter si l'interface de contrôle appartient à une liste d'interfaces dynamiques ou à une liste d'interfaces statiques, la liste d'interfaces dynamiques comprenant une interface de contrôle qui est appelée dans le scénario d'affichage dynamique et la liste d'interfaces statiques comprenant une interface de contrôle qui est appelée dans le scénario d'affichage statique ; ou
détecter, au moyen d'une interface de codage appelée par un programme d'application qui fournit la trame d'image actuelle, si la trame d'image actuelle est une trame d'image générée dans le scénario d'affichage dynamique ou dans le scénario d'affichage statique, l'interface de codage comprenant une première interface de codage et une seconde interface de codage, la première interface de codage étant utilisée pour donner l'instruction de coder une trame d'image selon la première qualité de codage et la seconde interface de codage étant utilisée pour donner l'instruction de coder une trame d'image selon la seconde qualité de codage ; ou
obtenir dans le tampon d'affichage une trame d'image qui est adjacente à la trame d'image actuelle, détecter si des données d'image comprises respectivement dans la trame d'image actuelle et la trame d'image adjacente sont les mêmes et, quand les données d'image sont différentes, déterminer que la trame d'image actuelle est une trame d'image générée dans le scénario d'affichage dynamique ou, quand les données d'image sont les mêmes, déterminer que la trame d'image actuelle est une trame d'image générée dans le scénario d'affichage statique ; ou
obtenir dans le tampon d'affichage une trame d'image qui est adjacente à la trame d'image actuelle, extraire de la trame d'image actuelle et de la trame d'image adjacente des attributs d'image d'un même type, détecter si les attributs d'image obtenus respectivement sont les mêmes et, quand les attributs d'image sont différents, déterminer que la trame d'image actuelle est une trame d'image générée dans le scénario d'affichage dynamique ou, quand les attributs d'image sont les mêmes, déterminer que la trame d'image actuelle est une trame d'image générée dans le scénario d'affichage statique.

10. Appareil selon l'une quelconque des revendications 7 à 9, l'appareil comprenant en outre : un module de traitement de trame d'image, configuré pour : avant que le module de détection de trame d'image détecte si la trame d'image actuelle dans le tampon d'affichage est une trame d'image générée dans le scénario d'affichage dynamique ou dans le scénario d'affichage statique, obtenir une résolution du second dispositif ; et si la résolution du second dispositif est supérieure à une résolution du premier dispositif, réaliser un traitement de super-résolution sur la trame d'image actuelle.

11. Appareil selon l'une quelconque des revendications 7 à 10, l'appareil comprenant en outre :
un module d'obtention de qualité de réseau, configuré pour obtenir une qualité d'un réseau sur lequel doit être transmise la trame d'image actuelle qui a été codée ; et
un module de réglage de paramètre, configuré pour : régler, selon la qualité du réseau, obtenue par le module d'obtention de qualité de réseau, un paramètre de codage qui correspond à la première qualité de codage ou régler, selon la qualité du réseau, un paramètre de codage qui correspond à la seconde qualité de codage, une corrélation positive existant entre la qualité du réseau et un volume de données de la trame d'image actuelle qui a été codée, et la trame d'image actuelle qui a été codée étant obtenue à l'aide d'un codage selon le paramètre de codage.

12. Appareil selon la revendication 7, dans lequel la seconde qualité de codage correspond à un mode de compression sans pertes et le premier module de partage est spécifiquement configuré pour :
créer un canal de données de compression sans pertes et partager, avec le second dispositif d'affichage, au moyen du canal de données de compression sans pertes, la trame d'image actuelle qui a été codée, le canal de données de compression sans pertes et un canal de données de compression avec pertes étant mutuellement indépendants l'un de l'autre, et le canal de données de compression avec pertes étant utilisé pour transmettre une trame d'image qui est obtenue à l'aide d'un codage dans un mode de compression avec pertes ; ou
partager avec le second dispositif d'affichage, au moyen d'un canal de données de compression avec pertes qui correspond à un protocole de codage avec pertes, la trame d'image actuelle qui a été codée, le protocole de codage avec pertes comprenant un protocole de codage récemment ajouté qui correspond au mode de compression sans pertes, et le canal de données de compression avec pertes étant utilisé pour transmettre une trame d'image qui est obtenue à l'aide d'un codage au moyen du protocole de codage avec pertes.

13. Support de stockage lisible par ordinateur, comportant des instructions qui, lorsque les instructions sont exécutées par un ordinateur, amènent l'ordinateur à réaliser le procédé selon l'une quelconque des revendications 1 à 6.
